# EUROPEAN PATENT APPLICATION

(11) **EP 3 681 224 A1**
(43) Date of publication of application: **15.07.2020**
(21) Application number: 18854478.7
(22) Date of filing: 06.09.2018
(51) Int. Cl.: H04W 72/04, H04B 7/0452, H04L 27/26

(54) **TERMINAL DEVICE AND COMMUNICATION METHOD**

(30) Priority: 08.09.2017 JP 2017172864
(71) Applicant: Sharp Kabushiki Kaisha, Sakai City, Osaka 590-8522 (JP); FG INNOVATION COMPANY LIMITED, New Territories, HK (CN)
(72) Inventor: YOKOMAKURA Kozue, Osaka 590-8522 (JP)
(74) Representative: Müller Hoffmann & Partner
(86) International application number: PCT/JP2018/033065
(87) International publication number: WO 2019/049938

(57) **Abstract**

Included are a multiplexing unit configured to map a Phase Tracking Reference Signal (PTRS) to resources for a Physical Uplink Shared Channel (PUSCH) according to a first pattern, and map a Demodulation Reference Signal (DMRS) to the resources for the PUSCH according to a second pattern; and a transmitter configured to transmit the PUSCH with the PTRS and the DMRS mapped to the resources of the PUSCH, wherein in a case that a symbol position of the PTRS overlaps with a symbol position of the DMRS, the multiplexing unit maps the PTRS to a resource of the resources at a symbol position different from the symbol position that overlaps.

## Description

### Technical Field

The present invention relates to a terminal apparatus and a communication method.

This application claims priority based on JP 2017-172864 filed on September 8, 2017, the contents of which are incorporated herein by reference.

### Background Art

Technical studies and standardization of Long Term Evolution (LTE)-Advanced Pro and New Radio (NR) technology, as a radio access scheme and a radio network technology for fifth generation cellular systems, are currently conducted by the Third Generation Partnership Project (3GPP) (NPL 1).

The fifth generation cellular system requires three expected scenarios for services: enhanced Mobile BroadBand (eMBB) which realizes high-speed, high-capacity transmission, Ultra-Reliable and Low Latency Communication (URLLC) which realizes low-latency, high-reliability communication, and massive Machine Type Communication (mMTC) that allows a large number of machine type devices to be connected in a system such as Internet of Things (IoT).

In NR, reference signals for tracking phase noise generated by an oscillator have been studied for communication at high frequencies (NPL 2).

### Citation List

### Non Patent Literature

NPL 1: RP-161214, NTT DOCOMO, "Revision of SI: Study on New Radio Access Technology", June 2016
NPL 2: R1-1706676, Ericsson, Panasonic, Huawei, HiSilicon, NTT Docomo, "Merged WF on PT-RS structure", April 2017

### Summary of Invention

### Technical Problem

An object of the present invention is to provide a terminal apparatus and a communication method, where a base station apparatus and the terminal apparatus can efficiently communicate in the above-mentioned radio communication systems.

### Solution to Problem

(1) To accomplish the object described above, aspects of the present invention are contrived to provide the following measures. Specifically, a terminal apparatus according to one aspect of the present invention includes: a multiplexing unit configured to map a Phase Tracking Reference Signal (PTRS) to resources for a Physical Uplink Shared Channel (PUSCH) according to a first pattern, and map a Demodulation Reference Signal (DMRS) to the resources for the PUSCH according to a second pattern; and a transmitter configured to transmit the PUSCH with the PTRS and the DMRS mapped to the resources for the PUSCH, wherein in a case that a symbol position of the PTRS overlaps with a symbol position of the DMRS, the multiplexing unit maps the PTRS to a resource of the resources at a symbol position different from the symbol position that overlaps.
(2) In the terminal apparatus according to one aspect of the present invention, in the case that the symbol position of the PTRS overlaps with the symbol position of the DMRS, the multiplexing unit maps the PTRS to a resource of the resources at a different symbol position in a same subcarrier.
(3) A communication method according to one aspect of the present invention is a communication method for a terminal apparatus for communicating with a base station apparatus, the communication method including the steps of: mapping a Phase Tracking Reference Signal (PTRS) to resources for a Physical Uplink Shared Channel (PUSCH) according to a first pattern, and mapping a Demodulation Reference Signal (DMRS) to the resources for the PUSCH according to a second pattern; and transmitting the PUSCH with the PTRS and the DMRS mapped to the resources for the PUSCH, wherein in a case that a symbol position of the PTRS overlaps with a symbol position of the DMRS, the PTRS is mapped to a resource of the resources at a symbol position different from the symbol position that overlaps.
(4) A communication method according to one aspect of the present invention is a communication method for a base station apparatus for communicating with a terminal apparatus, wherein in the case that the symbol position of the PTRS overlaps with the symbol position of the DMRS, the multiplexing unit maps the PTRS to a resource of the resources at a different symbol position in a same subcarrier.

### Advantageous Effects of Invention

According to an aspect of the present invention, a base station apparatus and a terminal apparatus can efficiently communicate with each other.

### Brief Description of Drawings

FIG. 1 is a diagram illustrating a concept of a radio communication system according to the present embodiment.
FIG. 2 is a diagram illustrating a schematic configuration of a downlink slot according to the present embodiment.
FIG. 3 is a diagram illustrating a relationship between a subframe and a slot and a mini-slot in a time domain.
FIG. 4 is a diagram illustrating examples of a slot or a subframe.
FIG. 5 is a diagram illustrating an example of beamforming.
FIG. 6 is a schematic block diagram illustrating a configuration of a terminal apparatus 1 according to the present embodiment.
FIG. 7 is a schematic block diagram illustrating a configuration of a base station apparatus 3 according to the present embodiment.
FIG. 8 is a diagram illustrating a configuration example of PTRSs mapped to one resource element.
FIG. 9 is a diagram illustrating a first configuration example of a time density of PTRSs according to the present embodiment.
FIG. 10 is a diagram illustrating a second configuration example of a time density of PTRSs according to the present embodiment.
FIG. 11 is a diagram illustrating an example of an MCS table according to the present embodiment.
FIG. 12 is a diagram illustrating a configuration example of a frequency density of PTRSs according to the present embodiment.
FIG. 13 is a diagram illustrating a configuration example of CSI-RSs and PTRSs according to the present embodiment.
FIG. 14 is a diagram illustrating a first configuration example of DMRSs and PTRSs according to the present embodiment.
FIG. 15 is a diagram illustrating a second configuration example of DMRSs and PTRSs according to the present embodiment.
FIG. 16 is a diagram illustrating a third configuration example of DMRSs and PTRSs according to the present embodiment.

### Description of Embodiments

Embodiments of the present invention will be described below.

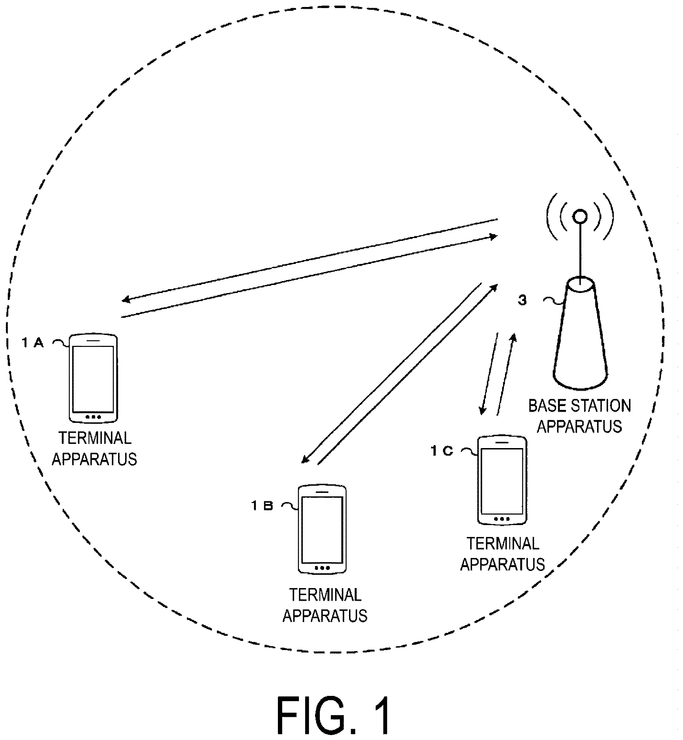

FIG. 1 is a conceptual diagram of a radio communication system according to the present embodiment. In FIG. 1, a radio communication system includes terminal apparatuses 1A to 1C and a base station apparatus 3. Each of the terminal apparatuses 1A to 1C is hereinafter also referred to as a terminal apparatus 1.

The terminal apparatus 1 is also called a user terminal, a mobile station apparatus, a communication terminal, a mobile device, a terminal, User Equipment (UE), and a Mobile Station (MS). The base station apparatus 3 is also referred to as a radio base station apparatus, a base station, a radio base station, a fixed station, a NodeB (NB), an evolved NodeB (eNB), a Base Transceiver Station (BTS), a Base Station (BS), an NR NodeB (NR NB), NNB, a Transmission and Reception Point (TRP), or gNB.

In FIG. 1, in a radio communication between the terminal apparatus 1 and the base station apparatus 3, Orthogonal Frequency Division Multiplexing (OFDM) including a Cyclic Prefix (CP), Single-Carrier Frequency Division Multiplexing (SC-FDM), Discrete Fourier Transform Spread OFDM (DFT-S-OFDM), or Multi-Carrier Code Division Multiplexing (MC-CDM) may be used.

In FIG 1, in the radio communication between the terminal apparatus 1 and the base station apparatus 3, Universal-Filtered Multi-Carrier (UFMC), Filtered OFDM (F-OFDM), Windowed OFDM, or Filter-Bank Multi-Carrier (FBMC) may be used.

Note that the present embodiment will be described by using OFDM symbol with the assumption that a transmission scheme is OFDM, and use of any other transmission scheme is also included in an aspect of the present invention.

In FIG. 1, in the radio communication between the terminal apparatus 1 and the base station apparatus 3, the CP may not be used, or the above-described transmission scheme with zero padding may be used instead of the CP. The CP or zero padding may be added both forward and backward.

In FIG. 1, in a radio communication between the terminal apparatus 1 and the base station apparatus 3, Orthogonal Frequency Division Multiplexing (OFDM) including a Cyclic Prefix (CP), Single-Carrier Frequency Division Multiplexing (SC-FDM), Discrete Fourier Transform Spread OFDM (DFT-S-OFDM), or Multi-Carrier Code Division Multiplexing (MC-CDM) may be used.

In FIG. 1, the following physical channels are used for the radio communication between the terminal apparatus 1 and the base station apparatus 3.
- Physical Broadcast CHannel (PBCH)
- Physical Downlink Control CHannel (PDCCH)
- Physical Downlink Shared CHannel (PDSCH)
- Physical Uplink Control CHannel (PUCCH)
- Physical Uplink Shared CHannel (PUSCH)
- Physical Random Access CHannel (PRACH)

The PBCH is used to broadcast essential information block ((Master Information Block (MIB), Essential Information Block (EIB), and Broadcast Channel (BCH)) which includes essential system information needed by the terminal apparatus 1.

The PBCH may be used to broadcast a time index within a period of a block of a synchronization signal (also referred to as an SS/PBCH block). Here, the time index is information indicating an index of a synchronization signal and a PBCH in the cell. For example, in a case that three transmit beams are used to transmit an SS/PBCH block, an order of time within a predetermined period or configured period may be indicated. The terminal apparatus may recognize a difference in time indexes as a difference in transmit beams.

The PDCCH is used to transmit Downlink Control Information (DCI) in downlink radio communication (radio communication from the base station apparatus 3 to the terminal apparatus 1). Here, one or more pieces of DCI (which may be referred to as DCI formats) are defined for transmission of the downlink control information. In other words, a field for the downlink control information is defined as DCI and is mapped to information bits.

For example, the DCI may be defined to include information for indicating a transmission period of the downlink including the PDCCH and/or the PDSCH, a gap, and a transmission period of the uplink including PUCCH and/or the PUSCH, the SRS.

For example, the DCI may be defined to include information for indicating a transmission period of a scheduled PDSCH.

For example, the DCI may be defined to include information for indicating a transmission period of a scheduled PUSCH.

For example, the DCI may be defined to include information for indicating a timing to transmit a HARQ-ACK for a scheduled PDSCH.

For example, the DCI may be defined to include information for indicating a timing to transmit a HARQ-ACK for a scheduled PUSCH.

For example, the DCI may be defined to be used for the scheduling of a downlink radio communication PDSCH in a cell (transmission of a downlink transport block).

For example, the DCI may be defined to be used for the scheduling of an uplink radio communication PUSCH in a cell (transmission of an uplink transport block).

Here, the DCI includes information about the scheduling of the PUSCH or the PDSCH. Here, the DCI for the downlink is also referred to as downlink grant or downlink assignment. Here, the DCI for the uplink is also referred to as uplink grant or Uplink assignment.

The PUSCH is used to transmit Uplink Control Information (UCI) in uplink radio communication (radio communication from the terminal apparatus 1 to the base station apparatus 3). Here, the uplink control information may include Channel State Information (CSI) used to indicate a downlink channel state. The uplink control information may include Scheduling Request (SR) used to request an UL-SCH resource. The uplink control information may include a Hybrid Automatic Repeat request ACKnowledgement (HARQ-ACK). The HARQ-ACK may indicate a HARQ-ACK for downlink data (Transport block, Medium Access Control Protocol Data Unit (MAC PDU), or Downlink-Shared CHannel (DL-SCH)).

The PDSCH is used for a transmission of downlink data (Downlink Shared CHannel (DL-SCH)) from a medium access (Medium Access Control (MAC)) layer. In a case of the downlink, the PDSCH is used to transmit System Information (SI), a Random Access Response (RAR), and the like.

The PUSCH may be used to transmit uplink data (Uplink Shared CHannel (UL-SCH)) from a MAC layer or an HARQ-ACK and/or CSI together with the uplink data. The PUSCH may be used to transmit the CSI only or the HARQ-ACK and CSI only. In other words, the PUSCH may be used to transmit the UCI only.

Here, the base station apparatus 3 and the terminal apparatus 1 exchange (transmit and/or receive) signals with each other in higher layers. For example, the base station apparatus 3 and the terminal apparatus 1 may transmit and/or receive Radio Resource Control (RRC) signaling (also referred to as a Radio Resource Control (RRC) message or Radio Resource Control (RRC) information) in a Radio Resource Control (RRC) layer. The base station apparatus 3 and the terminal apparatus 1 may transmit and/or receive a Medium Access Control control element (MAC CE) in a Medium Access Control (MAC) layer. Here, the RRC signaling and/or the MAC control element is also referred to as higher layer signaling.

The PDSCH or PUSCH may be used to transmit the RRC signaling and the MAC control element. Here, in the PDSCH, the RRC signaling transmitted from the base station apparatus 3 may be signaling common to multiple terminal apparatuses 1 in a cell. The RRC signaling transmitted from the base station apparatus 3 may be signaling dedicated to a certain terminal apparatus 1 (also referred to as dedicated signaling). In other words, terminal apparatus-specific (UE-specific) information may be transmitted through signaling dedicated to the certain terminal apparatus 1. The PUSCH may be used to transmit UE Capabilities in the uplink.

In FIG. 1, the following downlink physical signals are used for downlink radio communication. Here, the downlink physical signals are not used to transmit information output from the higher layers but are used by the physical layer.
- Synchronization signal (SS)
- Reference Signal (RS)

The synchronization signal may include a Primary Synchronization Signal (PSS) and a Secondary Synchronization Signal (SSS). A cell ID may be detected by using the PSS and SSS.

The synchronization signal is used for the terminal apparatus 1 to establish synchronization in a frequency domain and a time domain in the downlink. Here, the synchronization signal may be used for the terminal apparatus 1 to select precoding or a beam in precoding or beamforming performed by the base station apparatus 3. Note that a beam may be referred to as a transmission or reception filter configuration.

A reference signal is used for the terminal apparatus 1 to perform channel compensation on a physical channel. Here, the reference signal is used for the terminal apparatus 1 to calculate the downlink CSI. The reference signal may be used for a numerology such as a radio parameter or subcarrier spacing, or used for Fine synchronization that allows FFT window synchronization to be achieved.

According to the present embodiment, at least one of the following downlink reference signals are used.
- Demodulation Reference Signal (DMRS)
- Channel State Information Reference Signal (CSI-RS)
- Phase Tracking Reference Signal (PTRS)
- Tracking Reference Signal (TRS)

The DMRS is used to demodulate a modulated signal. Note that two types of reference signals may be defined as the DMRS: a reference signal for demodulating the PBCH or the PDCCH; and a reference signal for demodulating the PDSCH, or that both reference signals may be referred to as the DMRS. The CSI-RS is used for measurement of Channel State Information (CSI) and beam management. The PTRS is used to track the phase in the time axis in order to compensate for the frequency offset due to phase noise. The TRS is used to compensate for Doppler shifts during fast travel. Note that the TRS may be used as one configuration for a CSI-RS. For example, a single port CSI-RS may be configured with radio resources as the TRS.

According to the present embodiment, at least one of the following uplink reference signals are used.
- Demodulation Reference Signal (DMRS)
- Phase Tracking Reference Signal (PTRS)
- Sounding Reference Signal (SRS)

The DMRS is used to demodulate a modulated signal. Note that two types of reference signals may be defined as the DMRS: a reference signal for demodulating the PUCCH; and a reference signal for demodulating the PUSCH, or that both reference signals may be referred to as the DMRS. The SRS is used for measurement of the uplink Channel State Information (CSI), channel sounding, and beam management. The PTRS is used to track the phase in the time axis in order to compensate for the frequency offset due to phase noise.

Here, in a case that the uplink transmission scheme (waveform) is CP-OFDM, the same configuration as the uplink PTRS may be used, or separate configuration may be used. In a case of the uplink transmission scheme (waveform), a PTRS symbol may be inserted (allocated) with continuous samples of K symbols as one unit (continuous samples of K symbols may be referred to as a chunk) for transmitting the uplink PTRS, and transform precoding (for example, DFT) may be applied after multiple chunks are discretely allocated. The value of K may be 1, 2, or 4 or the like, or may be indicated by RRC signaling, MAC CE, or DCI.

The downlink physical channels and/or the downlink physical signals are collectively referred to as a downlink signal. The uplink physical channels and/or the uplink physical signals are collectively referred to as an uplink signal. The downlink physical channels and/or the uplink physical channels are collectively referred to as a physical channel. The downlink physical signals and/or the uplink physical signals are collectively referred to as a physical signal.

The BCH, the UL-SCH, and the DL-SCH are transport channels. A channel used in the Medium Access Control (MAC) layer is referred to as a transport channel. A unit of the transport channel used in the MAC layer is also referred to as a Transport Block (TB) and/or a MAC Protocol Data Unit (PDU). A Hybrid Automatic Repeat reQuest (HARQ) is controlled for each transport block in the MAC layer. The transport block is a unit of data that the MAC layer delivers to the physical layer. In the physical layer, the transport block is mapped to a codeword, and coding processing is performed for each codeword.

The reference signal may also be used for Radio Resource Measurement (RRM). The reference signal may also be used for beam management.

Beam management may be a procedure of the base station apparatus 3 and/or the terminal apparatus 1 for matching directivity of an analog and/or digital beam in a transmission apparatus (the base station apparatus 3 in the downlink and the terminal apparatus 1 in the uplink) with directivity of an analog and/or digital beam in a reception apparatus (the terminal apparatus 1 in the downlink and the base station apparatus 3 in the uplink) to acquire a beam gain.

Note that a procedure for configuring, setting, or establishing a beam pair link may include the following procedures.
- Beam selection
- Beam refinement
- Beam recovery

For example, the beam selection may be a procedure for selecting a beam in communication between the base station apparatus 3 and the terminal apparatus 1. The beam refinement may be a procedure for selecting a beam having a higher gain or changing a beam to an optimum beam between the base station apparatus 3 and the terminal apparatus 1 according to the movement of the terminal apparatus 1. The beam recovery may be a procedure for re-selecting the beam in a case that the quality of a communication link is degraded due to blockage caused by a blocking object, a passing human being, or the like in communication between the base station apparatus 3 and the terminal apparatus 1.

The beam management may include beam selection, and beam refinement. The beam recovery may include the following procedures.
- Detection of beam failure
- Discovery of new beam
- Transmission of beam recovery request
- Monitoring of response for beam recovery request

For example, in a case of selecting the transmit beam of the base station apparatus 3 in the terminal apparatus 1, Reference Signal Received Power (RSRP) of the SSS included in the CSI-RS or SS/PBCH block may be used, or the CSI may be used. The CSI-RS Resource Index (CRI) may be used as a report to the base station apparatus 3, or a time index that is broadcast in the PBCH included in the SS/PBCH block may be used.

The base station apparatus 3 indicates the time index of the CRI or the SS/PBCH in a case of indicating the beam to the terminal apparatus 1, and the terminal apparatus 1 receives based on the indicated the CRI or time index of the SS/PBCH. At this time, the terminal apparatus 1 may configure a spatial filter, based on the indicated CRI or time index of the SS/PBCH to receive. The terminal apparatus 1 may receive by using the assumption of a Quasi-Co-Location (QCL).

In a case that a long term property of a channel on which one symbol in one antenna port is carried may be estimated from a channel on which one symbol in the other antenna port is carried, the two antenna ports are said to have a QCL relationship. The long term property of the channel includes at least one of a delay spread, a Doppler spread, a Doppler shift, an average gain, or an average delay. For example, in a case that antenna port 1 and antenna port 2 have a QCL relationship with respect to the average delay, this means that a reception timing for antenna port 2 may be estimated from a reception timing for antenna port 1.

The QCL may also be expanded to beam management. For this purpose, spatially expanded QCL may be newly defined. For example, the long term property of a channel in spatial QCL assumption may be arrival angle (an Angle of Arrival (AoA), a Zenith angle of Arrival (ZoA), or the like), an Angle Spread (for example, Angle Spread of Arrival (ASA) or a Zenith angle Spread of Arrival (ZSA)), an angle of departure (AoD, ZoD, or the like), an angle spread of the angle of departure (for example, an Angle Spread of Departure (ASD) or a Zenith angle Spread of Departure (ZSS)), Spatial Correlation, and/or a reception spatial parameter, in a radio link or channel.

For example, in a case that it can be considered that antenna port 1 and antenna port 2 have a QCL relationship with respect to the reception spatial parameter, this means that the received beam for receiving a signal from antenna port 2 can be inferred by the received beam (spatial filter) for receiving a signal from antenna port 1.

According to this method, an operation of the base station apparatus 3 and the terminal apparatus 1 equivalent to beam management may be defined as beam management and beam indication/report, based on the spatial QCL assumption and radio resources (time and/or frequency).

The subframe will now be described. The subframe in the present embodiment may also be referred to as a resource unit, a radio frame, a time period, or a time interval.

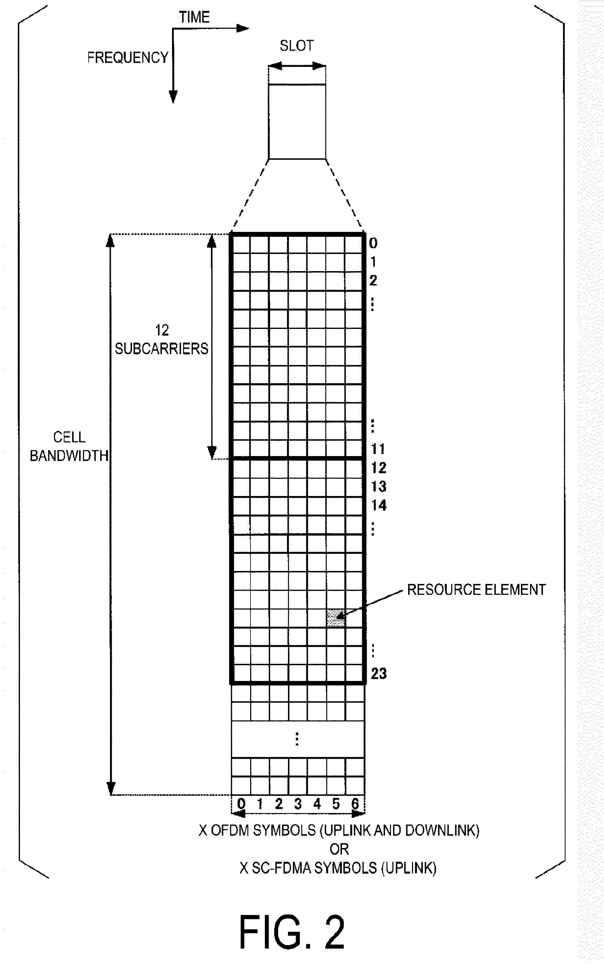

FIG. 2 is a diagram illustrating a schematic configuration of a downlink slot according to a first embodiment of the present invention. Each of the radio frames is 10 ms in length. Each of the radio frames includes 10 subframes and W slots. One slot includes X OFDM symbols. In other words, the length of one subframe is 1 ms. For each of the slots, time length is defined based on subcarrier spacings. For example, in a case that the subcarrier spacing of an OFDM symbol is 15 kHz and Normal Cyclic Prefixes (NCPs) are used, X = 7 or X = 14, and X = 7 ad X = 14 correspond to 0.5 ms and 1 ms, respectively. In a case that the subcarrier spacing is 60 kHz, X = 7 or X = 14, and X = 7 and X = 14 correspond to 0.125 ms and 0.25 ms, respectively. For example, in the case of X = 14, W = 10 for the subcarrier spacing being 15 kHz, and W = 40 for the subcarrier spacing being 60 kHz. FIG. 2 illustrates a case of X = 7 as an example. Note that a case of X = 14 can be similarly configured by expanding the case of X = 7. The uplink slot is defined similarly, and the downlink slot and the uplink slot may be defined separately. The bandwidth of the cell of FIG. 2 may also be defined as a part of the band or BandWidth Part (BWP). The slot may be defined as a Transmission Time Interval (TTI). The slot may not be defined as a TTI. The TTI may be a transmission period of a transport block.

The signal or the physical channel transmitted in each of the slots may be represented by a resource grid. The resource grid is defined by multiple subcarriers and multiple OFDM symbols. The number of subcarriers constituting one slot depends on each of the downlink and uplink bandwidths of a cell. Each element within the resource grid is referred to as a resource element. The resource element may be identified by using a subcarrier number and an OFDM symbol number.

A resource block is used to represent mapping of a certain physical downlink channel (such as the PDSCH) or a certain physical uplink channel (such as the PUSCH) to resource elements. As the resource block, a virtual resource block and a physical resource block are defined. A certain physical uplink channel is first mapped to a virtual resource block. Thereafter, the virtual resource block is mapped to a physical resource block. In a case that the number X of OFDM symbols included in a slot is 7 and NCPs are used, one physical resource block is defined by 7 continuous OFDM symbols in the time domain and by 12 continuous subcarriers in the frequency domain. Hence, one physical resource block includes (7 × 12) resource elements. In a case of Extended CPs (ECPs), one physical resource block is defined by, for example, 6 continuous OFDM symbols in the time domain and by 12 continuous subcarriers in the frequency domain. Hence, one physical resource block includes (6 × 12) resource elements. In this case, one physical resource block corresponds to one slot in the time domain and corresponds to 180 kHz in a case of a subcarrier spacing of 15 kHz (720 kHz in a case of 60 kHz) in the frequency domain. Physical resource blocks are numbered from 0 in the frequency domain.

Next, the subcarrier spacing configuration µ will be described. In NR, multiple OFDM numerologies are supported. In a certain BWP, the subcarrier spacing configuration µ (µ = 0, 1, ..., 5) and the cyclic prefix length are given in a higher layer for the BWP of the downlink and are given in a higher layer in the BWP of the uplink. Here, in a case that µ is given, the subcarrier spacing Δf is given by Δf = 2^µ · 15 (kHz).

In the subcarrier spacing configuration µ, the slots are counted in ascending order from 0 to N^{subframe, u}_{slot} - 1 within the subframe, and counted in ascending order from 0 to N^{frame, u}_{slot} - 1 within the frame. N^{slot}_{symb} continuous OFDM symbols are in the slots, based on slot configuration and cyclic prefix. N^{slot}_{symb} is 7 or 14. The start of the slot n^{µ}_{s} in the subframe is aligned in terms of time with the start of the OFDM symbol at n^{µ}_{s} N^{slot}_{symb} in the same subframe.

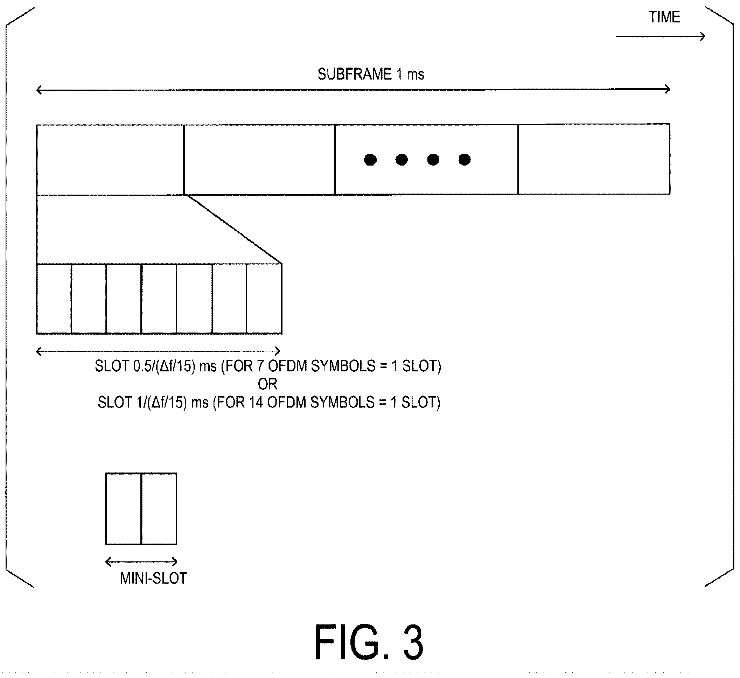

The subframe, the slot, and a mini-slot will now be described. FIG. 3 is a diagram illustrating the relationship between the subframe and the slot and the mini-slot in the time domain. As illustrated in FIG. 3, three types of time units are defined. The subframe is 1 ms regardless of the subcarrier spacing. The number of OFDM symbols included in the slot is 7 or 14, and the slot length depends on the subcarrier spacing. Here, in a case that the subcarrier spacing is 15 kHz, 14 OFDM symbols are included in one subframe.

The mini-slot (which may be referred to as a sub-slot) is a time unit including OFDM symbols that are less in number than the OFDM symbols included in the slot. FIG. 3 illustrates, by way of example, a case in which the mini-slot includes 2 OFDM symbols. The OFDM symbols in the mini-slot may match the timing for the OFDM symbols constituting the slot. Note that the smallest unit of scheduling may be a slot or a mini-slot. Allocating mini-slots may be referred to as non-slot based scheduling. Scheduling of mini-slots may also be expressed as scheduling of resources in which the relative time positions of the starting positions of the reference signal and the data are fixed.

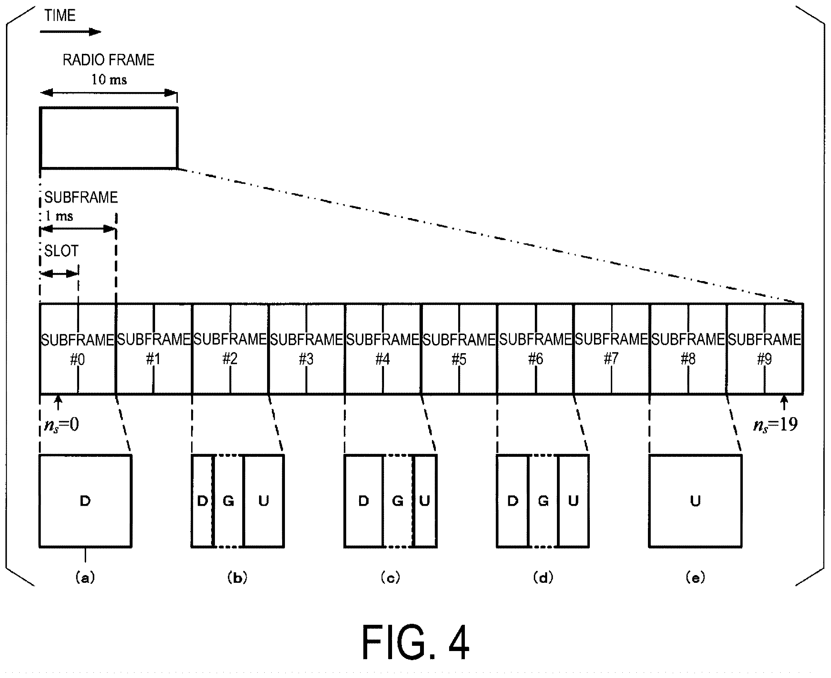

FIG. 4 is a diagram illustrating examples of a slot or a subframe. Here, a case in which the slot length is 0.5 ms at a subcarrier spacing of 15 kHz is illustrated as an example. In FIG. 4, D represents the downlink, and U represents the uplink. As illustrated in FIG. 4, during a certain time interval (for example, the minimum time interval to be allocated to one UE in the system), the subframe may include at least one of the followings:
- downlink part (duration),
- gap, or
- uplink part (duration).
Note that the ratio of these may be predetermined as a slot format. The ratio may be defined by the number of OFDM symbols of the downlink included in the slot or the start position and end position within the slot. The ratio may be defined by the number of OFDM symbols or DFT-S-OFDM symbols of the uplink included in the slot or the start position and end position within the slot. Note that scheduling of slots may also be expressed as scheduling of resources in which the relative time positions of the reference signal and the slot boundary are fixed.

In a subframe (a) of FIG. 4, the entire subframe is used for downlink transmission during a certain time interval (which may be referred to as, for example, a minimum unit of time resource that can be allocated to one UE, or a time unit. Furthermore, multiple minimum units of time resources that are bundled may be referred to as a time unit). In a subframe (b) of FIG. 4, an uplink is scheduled via the PDCCH for example by using the first time resource, and an uplink signal is transmitted after a gap for a processing delay of the PDCCH, a time for switching from a downlink to an uplink, and generation of a transmit signal. In a subframe (c) of FIG. 4, a PDCCH and/or downlink PDSCH are transmitted by using the first time resource, and the PUSCH or PUCCH is transmitted after a gap for a processing delay, a time for switching from a downlink to an uplink, and generation of a transmit signal. Here, for example, the uplink signal may be used to transmit the HARQ-ACK and/or CSI, namely, the UCI. In a subframe (d) of FIG. 4, a PDCCH and/or PDSCH are transmitted by using the first time resource, and the uplink PUSCH and/or PUCCH is transmitted after a gap for a processing delay, a time for switching from a downlink to an uplink, and generation of a transmit signal. Here, for example, the uplink signal may be used to transmit the uplink data, namely, the UL-SCH. In a subframe (e) of FIG. 4, the entire subframe is used for uplink transmission (PUSCH or PUCCH).

The above-described downlink part and uplink part may include multiple OFDM symbols as is the case with LTE.

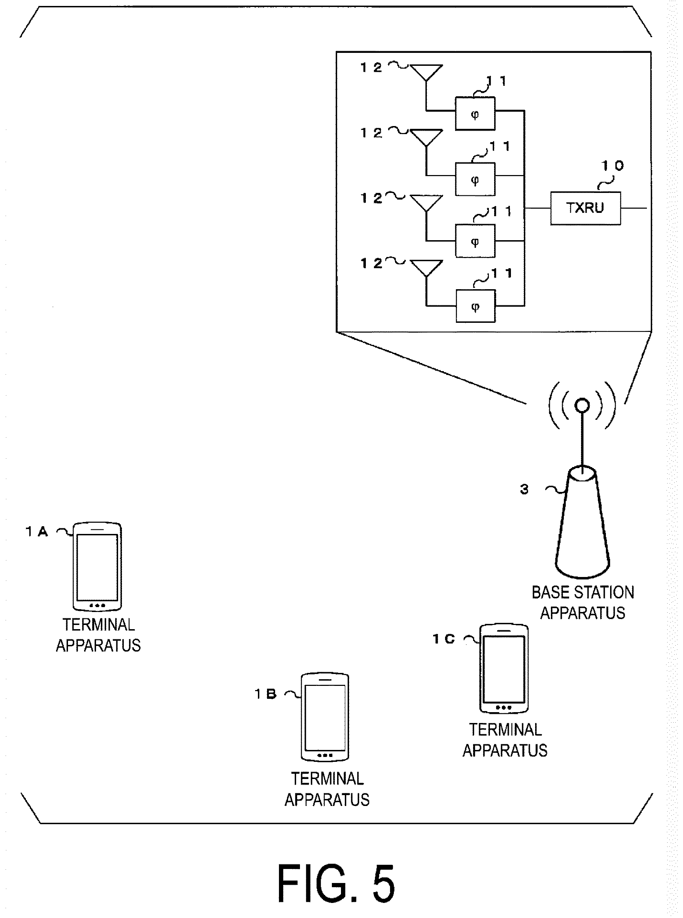

FIG. 5 is a diagram illustrating an example of beamforming. Multiple antenna elements are connected to one Transceiver unit (TXRU) 10. The phase is controlled by using a phase shifter 11 for each antenna element and a transmission is performed from an antenna element 12, thus allowing a beam for a transmit signal to be directed in any direction. Typically, the TXRU may be defined as an antenna port, and only the antenna port may be defined for the terminal apparatus 1. Controlling the phase shifter 11 allows setting of directivity in any direction. Thus, the base station apparatus 3 can communicate with the terminal apparatus 1 by using a high gain beam.

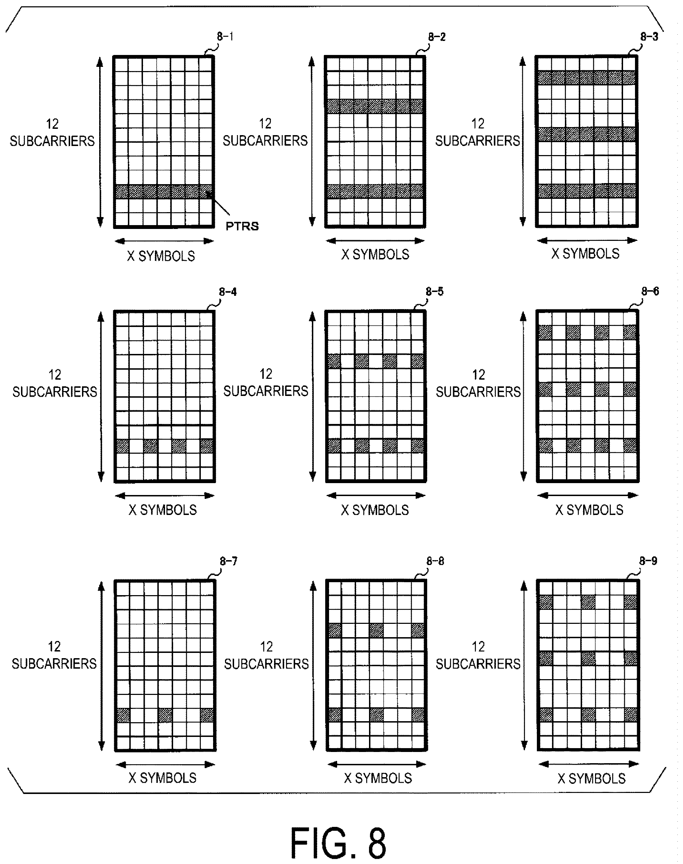

FIG. 8 is a diagram illustrating a configuration example of PTRSs mapped to one resource element. In FIG. 8, each of the diagrams (FIGS. 8-1 to 8-9) illustrates a configuration example of PTRSs mapped to one resource element. In FIG. 8-1 to FIG. 8-9, hatched locations with diagonal lines are resource elements to which PTRSs are mapped, and other locations are resource elements to which those other than PTRS (data, DMRSs CSI-RSs, SRSs, or the like) are mapped. Note that FIG. 8 illustrates a case in which the symbol number X is 7, but the symbol number X can be expanded in a case that the symbol number X is other than 7.

In FIG. 8, each of FIGS. 8-1 to 8-9 is defined as a pattern 1 to a pattern 9, and for example, FIG. 8-1 is defined as a pattern 1, FIG. 8-2 is defined as a pattern 2, and FIG. 8-5 is defined as a pattern 5. Pattern 1 to pattern 3 are examples in which PTRSs are allocated continuously in the time direction, pattern 4 to pattern 6 are examples in which every other PTRS is allocated in the time direction, and pattern 7 to pattern 9 are examples in which every third PTRS is allocated in the time direction. Note that the PTRS is not limited to FIG. 8, and may be allocated with two or more intervals in the time direction, and an interval in the frequency direction and a subcarrier position are also not limited to FIG. 8. A pattern of the patterns illustrated in FIG. 8 may be defined, or multiple patterns may be defined for the PTRS. Note that the PTRS allocation pattern may be configured in advance as illustrated in FIG. 8, and the PTRS may be generated based on the pattern number, or the PTRS may be generated by specifying a position at which the PTRS is allocated.

Here, the terminal apparatus 1 may not map a signal of the PUSCH to a resource element to which a PTRS is mapped. In other words, in a case that the signal of the PUSCH is not mapped, a rate match may be applied in which a resource element to which a PTRS is mapped is not a resource element capable of arranging a signal of the PUSCH. A signal of the PUSCH may be allocated on a resource element to which a PTRS is mapped, but the resource element may be overwritten by the PTRS. In this case, the base station apparatus 3 may perform demodulation processing by assuming that data is allocated on the resource element to which the PTRS is allocated.

Different PTRSs may be generated depending on the frequency band. In low frequency bands that are not susceptible to phase rotation, the number of resource elements to which the PTRS is mapped may be reduced, and in high frequency bands that are susceptible to phase rotation, the number of resource elements to which the PTRS is mapped may be increased. For example, the PTRS may be configured for each frequency band, such that in a case that the frequency band is 4 GHz, pattern 7 is configured, and in a case that the frequency band is 40 GHz, pattern 2 is configured. For example, the PTRS may be configured for each frequency band, such that in a case that the frequency band is 4 GHz, pattern 2 is configured, and in a case that the frequency band is 40 GHz, pattern 3 is configured. For example, the PTRS may be configured for each frequency band, such that in a case that the frequency band is 4 GHz, pattern 5 is configured, and in a case that the frequency band is 40 GHz, pattern 2 is configured. In this manner, by increasing the number of resource elements to which the PTRS is mapped in high frequency bands that are susceptible to phase rotation, it is possible to improve phase tracking performance. By reducing the number of resource elements to which the PTRS is mapped in low frequency bands in which the influence of phase rotation is considered to be relatively low, it is possible to reduce overhead due to the PTRS while maintaining the phase tracking performance. Note that, in the low frequency bands, the PTRS need not be mapped in frequency bands in which the influence of phase rotation is not problematic.

Here, in a case that a PTRS pattern is configured, the terminal apparatus 1 may increase the number of PTRSs in the frequency direction, depending on the scheduling bandwidth. For example, in a case that a PTRS is mapped to the fifth subcarrier in one resource block, the number of subcarriers including the PTRS of the frequency axes may be increased in proportion to the number of resource blocks allocated based on scheduling, in other words, Downlink Control Information (DCI) transmitted on the physical downlink control channel. The number of subcarriers including the PTRS of the frequency axes within the resource block may be determined by the frequency band. The density of the PTRS in the frequency direction may be configured or activated or indicated by RRC, MAC CE, or DCI. The density of the PTRS of the frequency axis may be defined by the number of resource elements or the number of subcarriers included in the PTRS included in the resource block.

The density of the PTRS in the time direction may be determined by the frequency band. For example, in a case that the frequency band is 4 GHz, the PTRS may be transmitted based on pattern 7, and in a case of 30 GHz, the PTRS may be transmitted by pattern 1. For example, in a case that the frequency band is 4 GHz, the PTRS may be transmitted based on pattern 9, and in a case of 30 GHz, the PTRS may be transmitted by pattern 6. The density of the PTRS in the time direction may be configured or activated or indicated by RRC, MAC, or DCI. The density of the time axis may be defined by the number of resource elements included in the PTRS included in the resource block, the number of OFDM symbols within the slot, or the number of OFDM symbols within the subframe.

Different PTRSs may be generated depending on the MCS and modulation scheme. In a case of high modulation order, the number of resource elements to which the PTRS is mapped may be increased, and in a case of low modulation order, the number of resource elements to which the PTRS is mapped may be reduced. For example, the PTRS may be configured for each modulation scheme, such that in a case that the modulation scheme is 256 QAM, pattern 3 may be configured, and in a case that the modulation scheme is 16 QAM, pattern 1 may be configured. For example, the PTRS may be configured for each modulation scheme, such that in a case that the modulation scheme is 256 QAM, pattern 1 may be configured, and in a case that the modulation scheme is 16 QAM, pattern 4 may be configured. In this manner, by increasing the number of resource elements to which the PTRS is mapped in the case of high modulation order, it is possible to improve the phase tracking performance. By reducing the number of PTRSs in the case of low modulation order, it is possible to reduce overhead due to the PTRS while maintaining the phase tracking performance. Note that in a case that the modulation order is low and the influence of phase rotation is considered not to be a problem, the PTRS need not be mapped.

The PTRS may be configured for each radio transmission scheme. The number of resource elements to which the PTRS is mapped may be configured to be the same or may be configured to be different numbers between radio transmission schemes of DFTS-OFDM and CP-OFDM. For example, the same pattern may be selected for DFTS-OFDM and CP-OFDM. The pattern may be different, but the number of PTRSs may be the same number, such that pattern 1 may be configured in the case of DFTS-OFDM, and pattern 10 may be configured in the case of CP-OFDM. In this manner, by making the number of resource elements to which the PTRS is mapped in the case of DFTS-OFDM equal to the number of resource elements to which the PTRS is mapped in the case of CP-OFDM, the processing load to generate the PTRS may be equivalent. The number of PTRSs in the case of DFTS-OFDM may be configured to be greater than the number of PTRSs in the case of CP-OFDM. For example, pattern 2 may be configured in the case of DFTS-OFDM, and pattern 1 may be configured in the case of CP-OFDM, or pattern 1 may be configured in the case of DFTS-OFDM, and pattern 4 may be configured in the case of CP-OFDM. In this manner, by configuring the number of resource elements to which the PTRS is mapped in the case of DFTS-OFDM and the number of resource elements to which the PTRS is mapped in the case of CP-OFDM to be different numbers, it is possible to configure phase tracking preferable for properties of the transmission scheme.

In the case of DFTS-OFDM, PTRS symbols may be inserted into a particular time position prior to entering DFT. For example, PTRS symbols may be mapped to the resource elements in a manner of frequency first, and in a case that the number of scheduled PRBs is 4 (= 60 modulation symbols), PTRS symbols may be DFT-spread to the 6th, 18th (= 12 + 6), 30th (12 * 2 + 6), 42th (12 * 3 + 6) symbols of the time symbols input to DFT in generating each DFTS-OFDM symbol as the PTRS. PTRS symbols may be mapped to resource elements in a manner of time first, and the PTRS may be inserted into the first X symbols and be performed with DFT-spread. The PTRS may be inserted into X symbols in particular DFTS-OFDM symbols in the slot and be DFT-spread. X may be the number of DFTS-OFDM symbols included in the slot. PTRS symbols may be mapped in a specific pattern prior to DFT. After DFT-spread, the PTRS may be allocated at time and/or frequency.

The PTRS may be configured in consideration of the movement speed of the terminal apparatus. In a case of high movement speed, the number of resource elements to which the PTRS is mapped may be increased, and in a case of low movement speed, the number of resource elements to which the PTRS is mapped may be reduced. For example, the PTRS may be configured in consideration of the movement speed, such that in the case of high movement speed, pattern 3 may be configured, and in the case of low movement speed, pattern 7 may be configured. For example, the PTRS may be configured in consideration of the movement speed, such that in the case of high movement speed, pattern 3 may be configured, and in the case of low movement speed, pattern 1 may be configured. For example, the PTRS may be configured in consideration of the movement speed, such that in the case of high movement speed, pattern 2 may be configured, and in the case of low movement speed, pattern 8 may be configured. Accordingly, phase tracking can be performed appropriately in consideration of the movement speed.

A pattern of a PTRS may be defined as a position in which the PTRS is allocated (for example, subcarrier number (index) and/or time symbol number (index)). A pattern of a PTRS and an index may be associated in advance, and a pattern of a PTRS may be configured by an index.

A pattern of a PTRS may also be defined as the density at which the PTRS is allocated. The density at which the PTRS is allocated may be defined with a Time density and a Frequency density. The time density is a ratio of PTRSs with respect to the number of time symbols continuous, every other time symbol, every multiple time symbols, or within a single resource block, and the like. The frequency density is a ratio of PTRSs with respect to the number of subcarriers continuous, every other subcarrier, every multiple subcarriers, or in a single resource block, and the like.

A pattern of a PTRS may also be defined as a combination of a position to which the PTRS is allocated and a density at which the PTRS is allocated (for example, a combination of a subcarrier number and a time density).

Note that a PTRS pattern and/or a PTRS density may be configured by using multiple conditions. The multiple conditions are a frequency band, a scheduling bandwidth, an MCS or a modulation scheme, a radio transmission scheme, a movement speed of the terminal apparatus, a subcarrier spacing, and/or the like. One or multiple PTRS patterns and/or PTRS densities may be selected from among multiple conditions.

For example, the PTRS may be configured based on a radio transmission scheme and a frequency band, or may be configured based on a radio transmission scheme, a frequency band, and a modulation scheme. Note that a pattern of a PTRS may be defined for each radio transmission scheme. For example, in the case of DFTS-OFDM, pattern 1, pattern 2, and pattern 3 may be defined as a pattern of a PTRS, and in the case of CP-OFDM, pattern 4, pattern 5, and pattern 6 may be defined as a pattern of PTRS. In a case that the transmission is performed in a DFTS-OFDM scheme in the frequency band of 40 GHz, the PTRS may be selected from pattern 1, pattern 2, and pattern 3, based on the frequency band. In the case of DFTS-OFDM, a pattern may be defined where the PTRS is allocated on the third subcarrier from the bottom in the frequency position (for example, pattern 1, pattern 4, and pattern 6), and in the case of CP-OFDM, a pattern may be defined where the PTRS is allocated on the fifth subcarrier from the bottom in the frequency position.

Note that the radio transmission scheme may be configured or activated or indicated by RRC, MAC, and DCI. In this way, the terminal apparatus 1 may map the PTRS in consideration of the radio transmission scheme notified by the base station apparatus 3.

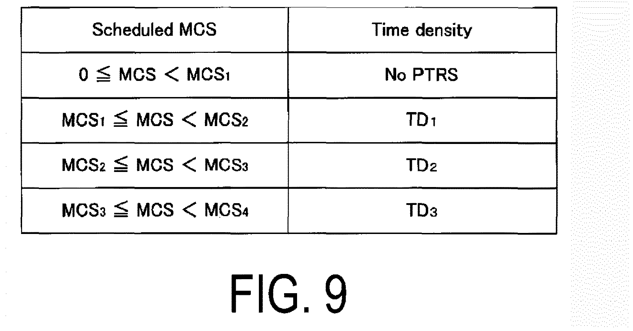

FIG. 9 is a diagram illustrating a first configuration example of a time density of PTRSs according to the present embodiment. FIG. 9 is a table illustrating the relationship between scheduled MCS and PTRS time density. In FIG. 9, MCS represents a scheduled MCS index. For example, in a case that the scheduled MCS index is 5, MCS is equal to 5. In FIG. 9, MCS₁ to MCS₄ represent MCS thresholds. For example, the MCS thresholds may be configured as MCS₁ = 10, MCS₂ = 17, MCS₃ = 23, and MCS₄ = 29. In FIG. 9, No PTRS indicates that PTRS is not allocated on the resource elements. In FIG. 9, TD₁ to TD₃ represent time densities, and for example, the time densities may be configured as TD₁ = 1/4, TD₂ = 1/2, and TD₃ = 1. Here, the time density may be interpreted as a ratio of PTRSs with respect to the number of time symbols within one resource block.

Note that in FIG. 9, the values of the MCS thresholds and the time densities are examples and are not limited to these values. FIG. 9 is an example of a table in which four types of time densities are configured, but the embodiment is not limited to FIG. 9, and time density may be three types of time densities or may be other number of types. The time density may not include No PTRS.

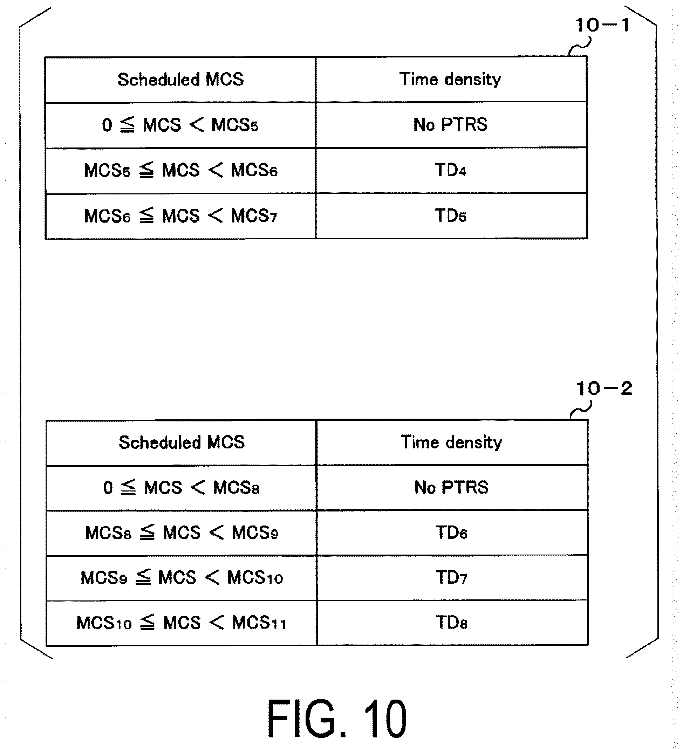

FIG. 10 is a diagram illustrating a second configuration example of a time density of PTRSs according to the present embodiment. FIG. 10 is an example of a case in which multiple tables of time densities are configured. In FIGS. 10-1 and 10-2, MCS₅ to MCS₁₁ represent MCS thresholds and TD₄ to TD₈ represent time densities. The table of time densities may be configured for each subcarrier spacing, and for example, in a case that the subcarrier spacing is 60 kHz, FIG. 10-1 may be configured, and in a case that the subcarrier spacing is 120 kHz, FIG. 10-2 may be configured. A table may be configured for each of the multiple conditions described above. Note that in FIG. 10, the MCS thresholds, the time densities, the types of tables, and the number of tables are examples and are not limited to FIG. 10. The time density may not include No PTRS. Multiple tables of time densities may be the same type of table, and for example, three tables of FIG. 10-1 may be prepared, and values of MCS thresholds and/or time densities may be configured to appropriate values.

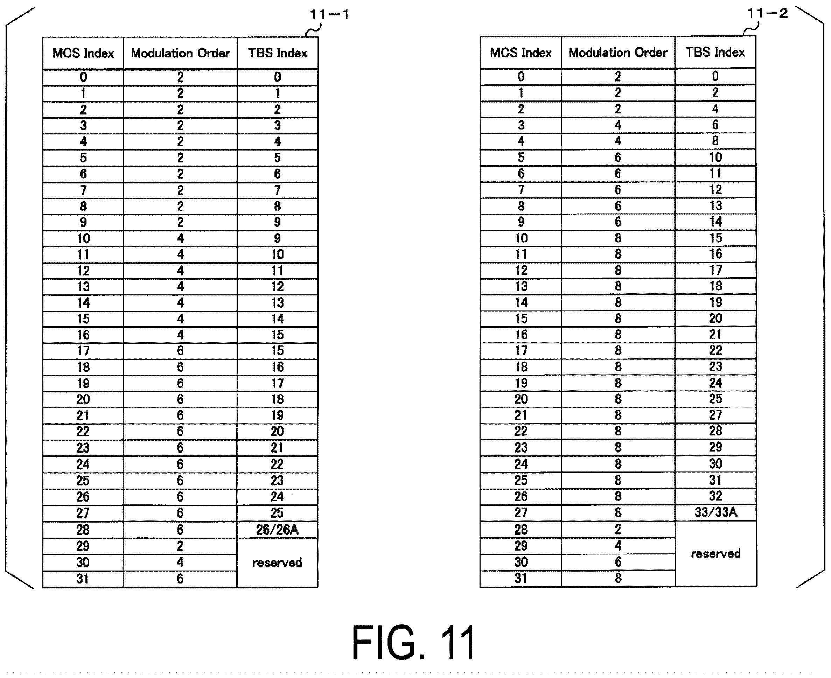

FIG. 11 is a diagram illustrating an example of an MCS table according to the present embodiment. There are two MCS tables in FIG. 11, and FIGS. 11-1 and 11-2 are diagrams illustrating a relationship between MCS indexes, Modulation Orders, and TBS indexes. In a case that multiple MCS tables are defined as in FIG. 11, MCS thresholds may be separately configured for each MCS table. For example, in FIG. 9, the MCS thresholds for the MCS table in FIG. 11-1 may be configured as MCS₁ = 10, MCS₂ = 17, MCS₃ = 23, and MCS₄ = 29, and the MCS thresholds for the MCS table in FIG. 11-2 may be configured as MCS₁ = 5, MCS₂ = 10, MCS₃ = 19, MCS₄ = 28. For example, in FIG. 10, the MCS thresholds for the MCS table in FIG. 11-1 may be configured as MCS₅ = 17, MCS₆ = 23, and MCS₇ = 29, and the MCS thresholds for the MCS table in FIG. 11-2 may be configured as MCS₈ = 5, MCS₉ = 10, MCS₁₀ = 19, and MCS₁₁ = 28. Note that the description of the time density is omitted, but values of the time density may be appropriately configured.

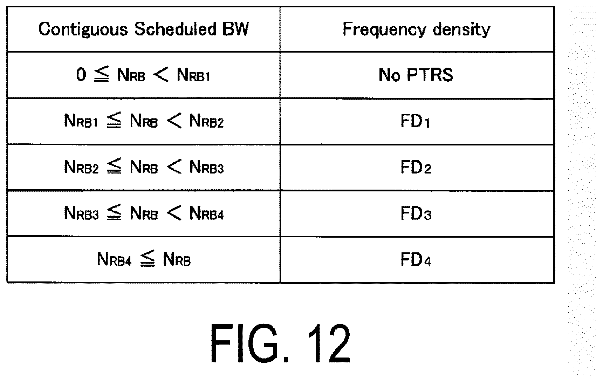

FIG. 12 is a diagram illustrating a configuration example of a frequency density of PTRSs according to the present embodiment. FIG. 12 is a table illustrating a relationship between continuously scheduled bandwidths and frequency densities of the PTRS. In FIG. 12, N_{RB} represents a continuously scheduled bandwidth, and for example N_{RB} is equal to 2 in a case that two resource blocks are scheduled continuously. In FIG. 12, N_{RB1} to N_{RB4} represent bandwidth thresholds, and, for example, the bandwidth thresholds may be configured as N_{RB1} = 3, N_{RB2} = 5, N_{RB3} = 10, and N_{RB4} = 15. In FIG. 12, No PTRS indicates that PTRS is not allocated on the resource elements. In FIG. 12, FD₁ to FD₃ represent frequency densities, and for example the frequency densities may be configured as FD₁ = 1, FD₂ = 1/2, FD₃ = 1/3, and FD₄ = 1/4. Here, in a case that the frequency density is configured to 1/N, the PTRS may be allocated for each N resource blocks in the scheduled bandwidth.

Note that in FIG. 12, the values of the bandwidth thresholds and the frequency densities are examples and are not limited to these values. FIG. 12 is an example of a table in which five types of frequency densities are configured, but the embodiment is not limited to FIG. 12, and time density may be three types of frequency densities or may be other number of types. The frequency density may not include No PTRS.

In FIG. 12, one table of frequency densities is illustrated, but multiple tables may be configured. For example, a table may be configured for each subcarrier spacing, or a table may be configured for each of the multiple conditions described above. The bandwidth thresholds of FIG. 12 may be predefined with a table as default values. The bandwidth thresholds in the predefined table may also be replaced by the RRC configuration.

In a case that the bandwidth is scheduled discontinuously, the frequency density may be configured by interpreting as N_{RB} = 1 in FIG. 12, or a table may be provided separately in the case that the bandwidth is scheduled discontinuously.

Note that the time density and/or the frequency density may be changed depending on the performance of the oscillator or the like. For example, FIG. 9 and/or FIG. 10 and/or FIG. 12 may be configured as default values, and configuration values may be changed at any time depending on RRC, MAC, and DCI.

The PTRS in the frequency direction may be allocated on one subcarrier, may be discontinuously distributed with multiple subcarriers, or may be allocated continuously on multiple subcarriers. The PTRS may not be configured, or may be indicated with information indicating the presence or absence of the PTRS in a case that the PTRS is not configured, or may be defined as a pattern indicating that the PTRS is not included.

The presence or absence of the PTRS and/or the pattern of the PTRS and/or the density of the PTRS may be configured or activated or indicated by RRC, MAC, DCI. The presence or absence of the PTRS may be dynamically switched depending on the parameters included in DCI. For example, the presence or absence of the PTRS may be configured based on the MCS and/or the scheduling bandwidth and/or the subcarrier spacing, or may be configured by selecting one or multiple of the multiple conditions described above.

In a case of transmitting using multiple antennas, the PTRS may be orthogonal between antenna ports. The terminal apparatus 1 may have the same antenna port for transmitting the PTRS as at least one port of the DMRS. For example, in a case that the number of antenna ports of the DMRS is 2, and the number of antenna ports of the PTRS is 1, either one of the antenna ports of the DMRS may be the same as the antenna port of the PTRS, or both may be the same. The antenna ports of the DMRS and the PTRS may also be assumed to have a QCL relationship. For example, a frequency offset of phase noise of the DMRS is inferred from the frequency offset compensated by the PTRS. Regardless of whether the PTRS is mapped, the DMRS may always be transmitted.

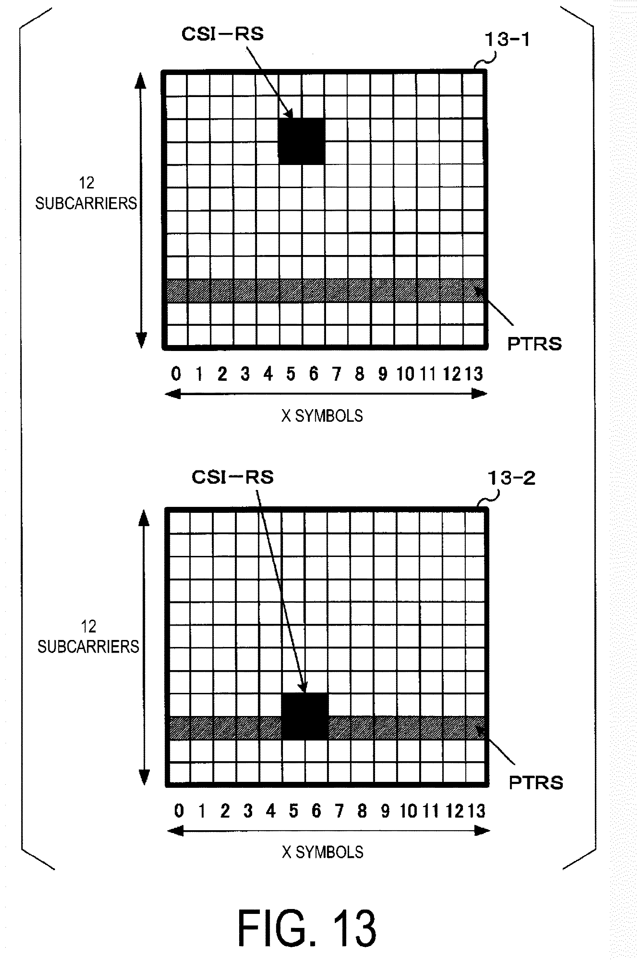

FIG. 13 is a diagram illustrating a configuration example of CSI-RSs and PTRSs according to the present embodiment. In FIGS. 13-1 and 13-2 of FIG. 13, a resource element filled with black color is a resource element to which a CSI-RS is mapped, and a hatched location with diagonal line is a resource element to which a PTRS is mapped.

Here, an example of a method for configuring a reference signal according to the present embodiment will be described. Reference signals (CSI-RS, front-load DMRS, additional DMRS, PTRS, etc.) may be configured or activated or indicated by RRC, MAC, DCI. For example, information for configuring a pattern of reference signals may be received in a higher layer, and indicated to be configured to a prescribed reference signal pattern, based on the information for configuring a pattern of reference signals, or the like. Here, the information for configuring a pattern of reference signals may be information about an allocation of reference signals, may be information about patterns of reference signals, may be information about positions at which reference signals are allocated, or may be information about the density of reference signals.

For example, in the case of the PTRS, the density of the PTRS may be received in the higher layer, and the PTRS may be indicated to be configured to a prescribed PTRS pattern, based on the information about the density of the PTRS, information included in DCI, or the like. Here, the prescribed PTRS pattern indicates positions of resource elements on which the PTRS is allocated.

After indicating the configuration as a prescribed PTRS pattern, the PTRS may be mapped to resource elements. After indicating the configuration as a prescribed PTRS pattern, the PTRS may be generated and mapped to resource elements. At this time, in the present embodiment, an allocation position of a prescribed reference signal pattern in reference signals other than the PTRS and a prescribed PTRS pattern is considered, and other reference signals and the PTRS are mapped to resource elements. Here, the being mapped may mean that an indicated prescribed reference signal pattern is actually allocated on the resource elements. The reference signal configuration method is applied in a case of mapping reference signals (CSI-RS, front-load DMRS, additional DMRS, etc.) other than the PTRS and the PTRS to resource elements.

Each of the diagrams in FIG. 13 is an example in which the PTRS is indicated to be allocated continuously in the symbol direction at the third subcarrier position from the bottom. FIG. 13-1 is an example of a case in which the allocation of the CSI-RS and the allocation of the PTRS do not overlap, and the CSI-RS and the PTRS are mapped to resource elements, as indicated in indicated prescribed reference signal patterns. On the other hand, FIG. 13-2 is an example of a case in which the CSI-RS and the PTRS overlap in a part of resource elements, and the CSI-RS is mapped to the overlapping resource elements. Thus, in a case that the PTRS is overlapped to the CSI-RS, the PTRS may not be mapped to the overlapping resource elements. In other words, the PTRS is not mapped to the resource elements to which the CSI-RS is mapped. Here, the PTRS being not mapped is equivalent to the PTRS being not allocated as indicated in an indicated prescribed PTRS pattern or PTRS being punctured.

Note that the patterns of the CSI-RS and the PTRS in FIG. 13 are examples and are not limited to FIG. 13. FIG. 13 is an example in which the number of symbols X in one resource block is 14, but the same applies even in a case that the number of symbols X is other than 14.

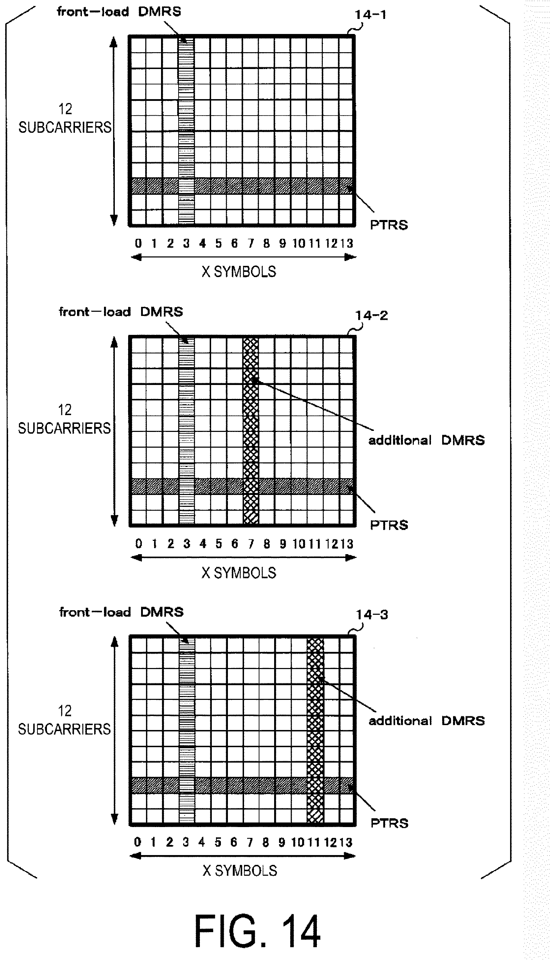

FIG. 14 is a diagram illustrating a first configuration example of DMRSs and PTRSs according to the present embodiment. In each diagram of FIG. 14 (FIGS. 14-1, 14-2, and 14-3), resource elements hatched with horizontal lines are resource elements to which the front-load DMRS is mapped, resource elements hatched with mesh are resource elements to which the additional DMRS is mapped, and a portion hatched with diagonal lines is resource elements to which the PTRS is mapped.

Each of the diagrams in FIG. 14 is a case in which the PTRS is indicated to be allocated continuously in the symbol direction at the third subcarrier position from the bottom. A case is illustrated in which the front-load DMRS is indicated to be allocated continuously in the subcarrier direction at the position at which the symbol number is 3. FIG. 14-2 is a case in which the additional DMRS is indicated to be allocated continuously in the subcarrier direction at the position of the symbol number 7, and FIG. 14-3 is a case in which the additional DMRS is indicated to be allocated continuously in the subcarrier direction at the position of the symbol number 11. FIG. 14-1 is a case in which the additional DMRS is not configured, and FIGS. 14-2 and 14-3 are cases in which the additional DMRS is configured.

In FIGS. 14-2 and 14-3, the additional DMRS and the PTRS overlap at some resource elements, and the additional DMRS is mapped to the overlapping resource elements. Thus, in a case that the additional DMRS and the PTRS overlap, the PTRS may not be mapped to the overlapping resource elements. That is, the PTRS is not mapped to the resource element to which the configured DMRS (additional DMRS) is mapped. Here, the PTRS being not mapped is equivalent to the PTRS being not allocated as indicated in an indicated prescribed PTRS pattern or PTRS being punctured.

Note that the patterns of the front-load DMRS, the additional DMRS, and the PTRS in FIG. 14 are examples and are not limited to FIG. 14. FIG. 14 is an example in which the number of symbols X in one resource block is 14, but the same applies even in a case that the number of symbols X is other than 14. The map of the front-load DMRS may be indicated by RRC signaling or DCI, and the front-load DMRS may be one symbol or two symbols. The map of the additional DMRS may be indicated by RRC signaling or DCI.

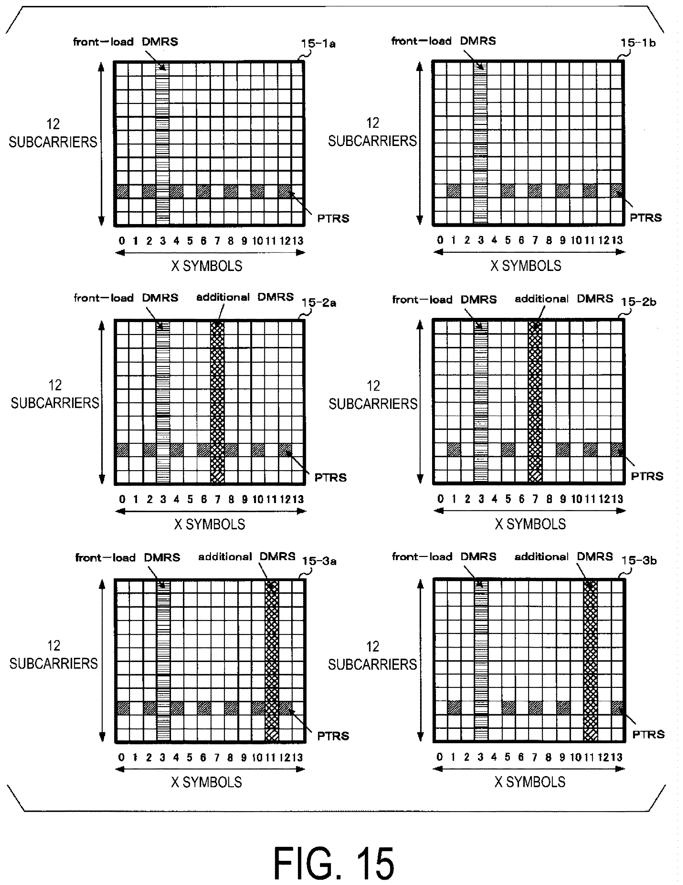

FIG. 15 is a diagram illustrating a second configuration example of DMRSs and PTRSs according to the present embodiment. In each diagram of FIG. 15 (FIGS. 15-1a, 15-1b, 15-2a, 15-2b, 15-3a, and 15-3b), resource elements hatched with horizontal lines are resource elements to which the front-load DMRS is mapped, resource elements hatched with mesh are resource elements to which the additional DMRS is mapped, and a portion hatched with diagonal lines is resource elements to which the PTRS is mapped.

Each of the diagrams in FIG. 15 is a case in which the PTRS is indicated to be allocated every other symbol in the third subcarrier position from the bottom. The allocation of the front-load DMRS is similar to that of FIG. 14, and for the allocation of the additional DMRS, FIG. 15-2 (FIGS. 15-2a and 15-2b) is a case in which the additional DMRS is indicated to be allocated at the position of the symbol number 7, and FIG. 15-3 (FIGS. 15-3a and 15-3b) is a case in which the additional DMRS is indicated to be allocated at the position of the symbol number 11. The difference between FIG. 15-1a and FIG. 15-1b is positions where the PTRS is allocated, and the same applies to FIGS. 15-2 and 15-3.

FIG. 15-1a and FIG. 15-1b are cases in which the additional DMRS is not configured, and FIGS. 15-2a, 15-2b, 15-3a, and 15-3b are cases in which the additional DMRS is configured. In FIGS. 15-2a and 15-3a, the additional DMRS and the PTRS do not overlap, so the additional DMRS and the PTRS are mapped to resource elements, as indicated in an indicated prescribed reference signal pattern. On the other hand, in FIGS. 15-2b and 15-3b, the additional DMRS and the PTRS overlap at some resource elements, and the additional DMRS is mapped to the overlapping resource elements. Thus, in a case that the additional DMRS and the PTRS overlap, the PTRS may not be mapped to the overlapping resource elements. Here, the PTRS being not mapped is equivalent to the PTRS being not allocated as indicated in an indicated prescribed PTRS pattern or PTRS being punctured.

Note that the front-load DMRS, the patterns of the front-load DMRS and the PTRS in FIG. 15 are examples and are not limited to FIG. 15. FIG. 15 is an example in which the number of symbols X in one resource block is 14, but the same applies even in a case that the number of symbols X is other than 14. The map of the front-load DMRS may be indicated by RRC signaling or DCI, and the front-load DMRS may be one symbol or two symbols. The map of the additional DMRS may be indicated by RRC signaling or DCI.

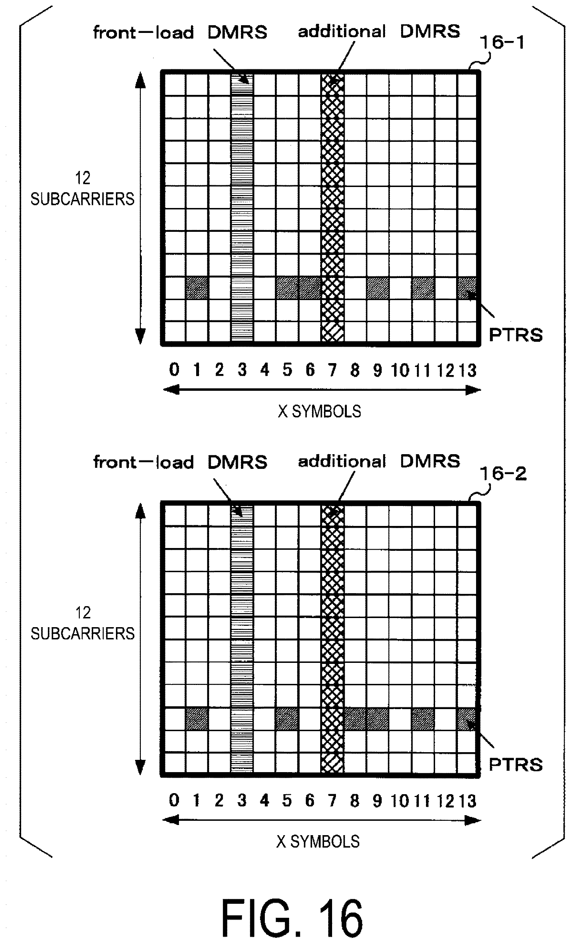

FIG. 16 is a diagram illustrating a third configuration example of DMRSs and PTRSs according to the present embodiment. In each diagram of FIG. 16 (FIGS. 16-1 and 16-2), resource elements hatched with horizontal lines are resource elements to which the front-load DMRS is mapped, resource elements hatched with mesh are resource elements to which the additional DMRS is mapped, and a portion hatched with diagonal lines is resource elements to which the PTRS is mapped. Each of the diagrams in FIG. 16 (FIGS. 16-1 and 16-2) is an example of mapping the PTRS overlapping the additional DMRS in FIG. 15-2b to different symbol positions. Specifically, the PTRS not mapped to the symbol position with the symbol number of 7 in FIG. 15-2b may be mapped to a position with the symbol number of 6 in FIG. 16-1, or may be mapped to a position with the symbol number of 8 in FIG. 16-2. In this way, the front-load DMRS and the overlapped PTRS may be mapped to different symbol positions with the same subcarrier number. In this manner, it is possible to maintain the density of the PTRS configured depending on the time density. Note that FIG. 16 is an example, and the symbol number to which the PTRS is mapped may not be a symbol number adjacent to the additional DMRS. Note that, even in a case that the PTRS overlaps with a reference signal other than the front-load DMRS (for example, CSI-RS, front-load DMRS, SRS, etc.), the method described above may be applied similarly.

Note that in the present embodiment, respective configuration methods for the configuration example of the CSI-RS and the PTRS and the configuration example of the DMRS and the PTRS are illustrated, but the method described above may also be applied in a case of configuring multiple reference signals (for example, CSI-RS and DMRS) and the PTRS. The multiple reference signals may be reference signals other than the CSI-RS and the DMRS.

The processing of the base station apparatus 3 and the terminal apparatus 1 according to the present embodiment will be described below. Note that the contents mainly related to the configuration of the PTRS will be described.

In the downlink transmission, an example of the operation of the base station apparatus 3 in the case of applying the CP-OFDM radio transmission scheme is illustrated. The base station apparatus 3 performs scheduling and configures the reference signal to the scheduled terminal apparatus 1. At this time, the base station apparatus 3 maps the CSI-RS, the front-load DMRS, the additional DMRS, the PTRS, and the like to resource elements, by using the above-described reference signal configuration method.

In the downlink transmission, an example of the operation of the terminal apparatus 1 in the case of applying the CP-OFDM radio transmission scheme is illustrated. The terminal apparatus 1 receives the signal transmitted from the base station apparatus 3, determines a pattern of the PTRS, and tracks phase noise by using the PTRS. For example, the terminal apparatus 1 may determine the pattern of the PTRS in a similar manner to the configuration rule of the PTRS in the base station apparatus 3, or may determine the pattern of the PTRS by using information notified by the DCI. For example, the terminal apparatus 1 may determine the density of the PTRS by using the MCS and/or the scheduling bandwidth, and the like.

In the uplink transmission, an example of the operation of the base station apparatus 3 in the case of applying the CP-OFDM radio transmission scheme is illustrated. The base station apparatus 3 receives the signal transmitted from the terminal apparatus 1, and tracks phase noise by using the PTRS. The base station apparatus 3 performs scheduling, and configures information necessary for configuring the PTRS in a case that the terminal apparatus 1 transmits in the uplink. The information necessary for configuring the PTRS may include, for example, a pattern of the PTRS, a density of the PTRS, and/or the like.

In the uplink transmission, an example of the operation of the terminal apparatus 1 in the case of applying the CP-OFDM radio transmission scheme is illustrated. The terminal apparatus 1 configures a reference signal in a case that the terminal apparatus 1 transmits in the uplink, based on the information configured in the base station apparatus 3. At this time, the terminal apparatus 1 maps the SRS, the front-load DMRS, the additional DMRS, the PTRS, and the like to resource elements, by using the above-described reference signal configuration method. Note that the terminal apparatus 1 may configure a pattern of the PTRS by using information notified by the DCI. For example, the terminal apparatus 1 may configure the density of the PTRS by using the MCS and/or the scheduling bandwidth or the like. The PTRS may not be mapped to the resource elements to which the front-load DMRS and the additional DMRS symbol are mapped. The PTRS may be mapped to the resource elements to which the SRS symbol is mapped, and the SRS symbols may not be mapped. The PTRS may not be mapped to the resource elements to which the SRS symbol is mapped.

In the uplink transmission, an example of the operation of the base station apparatus 3 and the terminal apparatus 1 in the case of applying the DFTS-OFDM (SC-FDM) radio transmission scheme is illustrated. Here, the description is mainly given of points different from the case where CP-OFDM is applied in uplink transmission. In the case of DFTS-OFDM (SC-FDM), the terminal apparatus 1 may insert the PTRS into a specific time position prior to entering into DFT. At this time, the PTRS may be inserted for each of continuous multiple samples or may be allocated discretely. The terminal apparatus 1 may map the PTRS in time and/or frequency after DFT-spread.

Note that the PTRS may be configured with a Zero Power-PTRS (ZP-PTRS), or may be configured or activated or indicated by RRC, MAC, DCI. The "ZP-PTRS" refers to information indicating a position of a resource element indicated to transmit by configuring transmit power to 0. For example, the ZP-PTRS may be applied in a case that Multiuser-MIMO (MU-MIMO), in which multiple terminal apparatuses 1 are multiplexed, or the like is used, and in a case that the terminal apparatus 1 A and the terminal apparatus 1 B are allocated to the same resources, the ZP-PTRS of the terminal apparatus 1 A may be configured to the position of the PTRS mapped to the terminal apparatus 1 B. The resource elements to which the ZP-PTRS is configured may be mapped with other reference signals (for example, CSI-RS, front-load DMRS, additional DMRS, etc.), or may be mapped with some reference signals, or may not be mapped. For example, the resource elements to which the ZP-PTRS is configured may be mapped with the CSI-RS and the front-load DMRS, but may not be mapped with the additional DMRS.

An aspect of the present embodiment may be operated in carrier aggregation or dual connectivity with the Radio Access Technologies (RAT) such as LTE and LTE-A/LTE-A Pro. In this case, the aspect may be used for some or all of the cells or cell groups, or the carriers or carrier groups (for example, Primary Cells (PCells), Secondary Cells (SCells), Primary Secondary Cells (PSCells), Master Cell Groups (MCGs), or Secondary Cell Groups (SCGs)). The aspect may be independently operated and used in a stand-alone manner.

Configurations of apparatuses according to the present embodiment will be described below. Here, an example is illustrated in which CP-OFDM is applied as a downlink radio transmission scheme, and CP-OFDM or DFTS-OFDM (SC-FDM) is applied as an uplink radio transmission scheme.

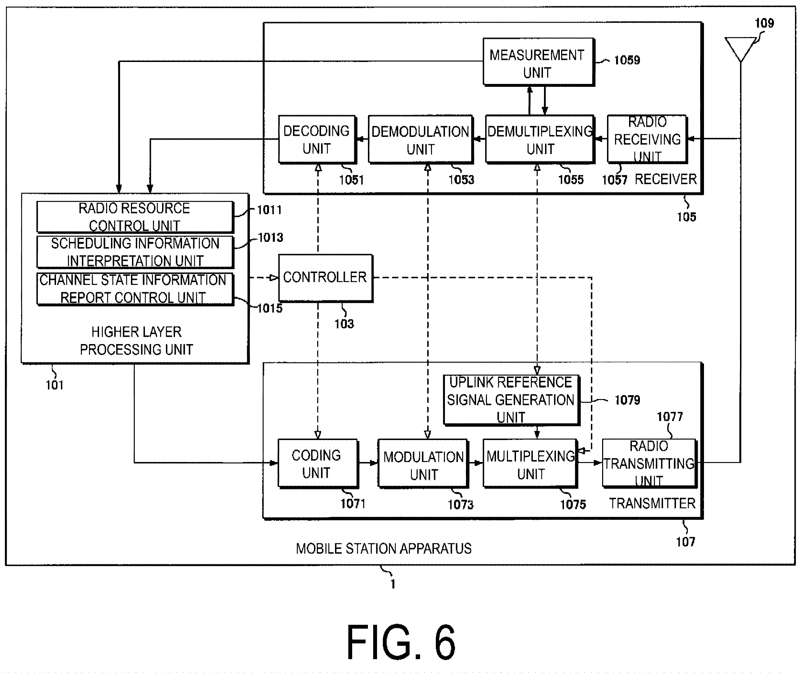

FIG. 6 is a schematic block diagram illustrating a configuration of the terminal apparatus 1 according to the present embodiment. As illustrated, the terminal apparatus 1 is configured to include a higher layer processing unit 101, a controller 103, a receiver 105, a transmitter 107, and a transmit and/or receive antenna 109. The higher layer processing unit 101 is configured to include a radio resource control unit 1011, a scheduling information interpretation unit 1013, and a Channel State Information (CSI) report control unit 1015. The receiver 105 is configured to include a decoding unit 1051, a demodulation unit 1053, a demultiplexing unit 1055, a radio receiving unit 1057, and a measurement unit 1059. The transmitter 107 includes a coding unit 1071, a modulation unit 1073, a multiplexing unit 1075, a radio transmitting unit 1077, and an uplink reference signal generation unit 1079.

The higher layer processing unit 101 outputs the uplink data (the transport block) generated by a user operation or the like, to the transmitter 107. The higher layer processing unit 101 performs processing of the Medium Access Control (MAC) layer, the Packet Data Convergence Protocol (PDCP) layer, the Radio Link Control (RLC) layer, and the Radio Resource Control (RRC) layer.

The radio resource control unit 1011 included in the higher layer processing unit 101 manages various pieces of configuration information of the terminal apparatus 1. The radio resource control unit 1011 generates information to be mapped to each uplink channel, and outputs the generated information to the transmitter 107.

The scheduling information interpretation unit 1013 included in the higher layer processing unit 101 interprets the DCI format (scheduling information) received through the receiver 105, generates control information for control of the receiver 105 and the transmitter 107, in accordance with a result of interpreting the DCI format, and outputs the generated control information to the controller 103.

The CSI report control unit 1015 indicates to the measurement unit 1059 to derive Channel State Information (RI/PMI/CQI/CRI) relating to the CSI reference resource. The CSI report control unit 1015 indicates to the transmitter 107 to transmit RI/PMI/CQI/CRI. The CSI report control unit 1015 sets a configuration that is used in a case that the measurement unit 1059 calculates CQI.

In accordance with the control information from the higher layer processing unit 101, the controller 103 generates a control signal for control of the receiver 105 and the transmitter 107. The controller 103 outputs the generated control signal to the receiver 105 and the transmitter 107 to control the receiver 105 and the transmitter 107.

In accordance with the control signal input from the controller 103, the receiver 105 demultiplexes, demodulates, and decodes a reception signal received from the base station apparatus 3 through the transmit and/or receive antenna 109, and outputs the decoded information to the higher layer processing unit 101.

The radio receiving unit 1057 converts (down-converts) a downlink signal received through the transmit and/or receive antenna 109 into a signal of an intermediate frequency, removes unnecessary frequency components, controls an amplification level in such a manner as to suitably maintain a signal level, performs orthogonal demodulation, based on an in-phase component and an orthogonal component of the received signal, and converts the resulting orthogonally-demodulated analog signal into a digital signal. The radio receiving unit 1057 removes a portion corresponding to a Guard Interval (GI) from the digital signal resulting from the conversion, performs Fast Fourier Transform (FFT) on the signal from which the Guard Interval has been removed, and extracts a signal in the frequency domain.

The demultiplexing unit 1055 demultiplexes the extracted signal into the downlink PDCCH, the downlink PDSCH, and the downlink reference signal. The demultiplexing unit 1055 performs channel compensation for the PDCCH and PDSCH, based on the channel estimate value input from the measurement unit 1059. The demultiplexing unit 1055 outputs the downlink reference signal resulting from the demultiplexing, to the measurement unit 1059.

The demodulation unit 1053 demodulates the PDCCH and outputs a signal resulting from the demodulation to the decoding unit 1051. The decoding unit 1051 attempts to decode the PDCCH. In a case of succeeding in the decoding, the decoding unit 1051 outputs downlink control information resulting from the decoding and an RNTI to which the downlink control information corresponds, to the higher layer processing unit 101.

The demodulation unit 1053 demodulates the PDSCH in compliance with a modulation scheme notified with the downlink grant, such as Quadrature Phase Shift Keying (QPSK), 16 Quadrature Amplitude Modulation (QAM), 64 QAM, or 256 QAM and outputs a signal resulting from the demodulation to the decoding unit 1051. The decoding unit 1051 performs decoding in accordance with information of a transmission or an original coding rate notified with the downlink control information, and outputs, to the higher layer processing unit 101, the downlink data (the transport block) resulting from the decoding.

The measurement unit 1059 performs downlink path loss measurement, channel measurement, and/or interference measurement from the downlink reference signal input from the demultiplexing unit 1055. The measurement unit 1059 outputs, to the higher layer processing unit 101, the measurement result and CSI calculated based on the measurement result. The measurement unit 1059 calculates a downlink channel estimate value from the downlink reference signal and outputs the calculated downlink channel estimate value to the demultiplexing unit 1055.

The transmitter 107 generates the uplink reference signal in accordance with the control signal input from the controller 103, codes and modulates the uplink data (the transport block) input from the higher layer processing unit 101, multiplexes the PUCCH, the PUSCH, and the generated uplink reference signal, and transmits a signal resulting from the multiplexing to the base station apparatus 3 through the transmit and/or receive antenna 109.

The coding unit 1071 codes the Uplink Control Information and the uplink data input from the higher layer processing unit 101. The modulation unit 1073 modulates the coded bits input from the coding unit 1071, in compliance with a modulation scheme such as BPSK, QPSK, 16 QAM, 64 QAM, or 256 QAM.

The uplink reference signal generation unit 1079 generates a sequence determined according to a prescribed rule (formula), based on a physical cell identity (also referred to as a Physical Cell Identity (PCI), a cell ID, or the like) for identifying the base station apparatus 3, a bandwidth in which the uplink reference signal is mapped, a cyclic shift notified with the uplink grant, a parameter value for generation of a DMRS sequence, and the like.

Based on the information used for the scheduling of PUSCH, the multiplexing unit 1075 determines the number of PUSCH layers to be spatially-multiplexed, maps multiple pieces of uplink data to be transmitted on the same PUSCH to multiple layers through Multiple Input Multiple Output Spatial Multiplexing (MIMO SM), and performs precoding on the layers.

In accordance with the control signal input from the controller 103, the multiplexing unit 1075 performs Discrete Fourier Transform (DFT) on modulation symbols of PUSCH. The multiplexing unit 1075 multiplexes PUCCH and/or PUSCH signals and the generated uplink reference signal for each transmit antenna port. To be more specific, the multiplexing unit 1075 maps the PUCCH and/or PUSCH signals and the generated uplink reference signal to the resource elements for each transmit antenna port.

The radio transmitting unit 1077 performs Inverse Fast Fourier Transform (IFFT) on a signal resulting from the multiplexing to perform modulation in compliance with an SC-FDM scheme, adds the Guard Interval to the SC-FDM-modulated SC-FDM symbol to generate a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 109 for transmission.

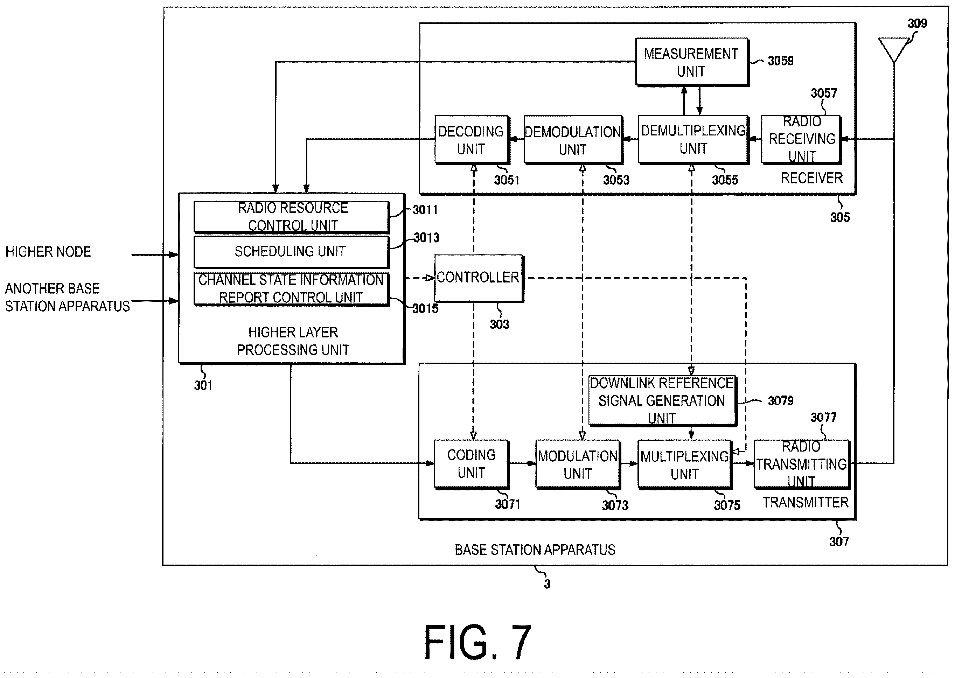

FIG. 7 is a schematic block diagram illustrating a configuration of the base station apparatus 3 according to the present embodiment. As is illustrated, the base station apparatus 3 is configured to include a higher layer processing unit 301, a controller 303, a receiver 305, a transmitter 307, and a transmit and/or receive antenna 309. The higher layer processing unit 301 is configured to include a radio resource control unit 3011, a scheduling unit 3013, and a CSI report control unit 3015. The receiver 305 is configured to include a decoding unit 3051, a demodulation unit 3053, a demultiplexing unit 3055, a radio receiving unit 3057, and a measurement unit 3059. The transmitter 307 includes a coding unit 3071, a modulation unit 3073, a multiplexing unit 3075, a radio transmitting unit 3077, and a downlink reference signal generation unit 3079.

The higher layer processing unit 301 performs processing of the Medium Access Control (MAC) layer, the Packet Data Convergence Protocol (PDCP) layer, the Radio Link Control (RLC) layer, and the Radio Resource Control (RRC) layer. The higher layer processing unit 301 generates control information for control of the receiver 305 and the transmitter 307, and outputs the generated control information to the controller 303.

The radio resource control unit 3011 included in the higher layer processing unit 301 generates, or acquires from a higher node, the downlink data (the transport block) mapped to the downlink PDSCH, system information, the RRC message, the MAC-CE, and the like, and outputs a result of the generation or the acquirement to the transmitter 307. The radio resource control unit 3011 manages various configuration information for each of the terminal apparatuses 1.

The scheduling unit 3013 included in the higher layer processing unit 301 determines a frequency and a subframe to which the physical channels (PDSCH or PUSCH) are allocated, the transmission coding rate and modulation scheme for the physical channels (PDSCH or PUSCH), the transmit power, and the like, from the received CSI and from the channel estimate, channel quality, or the like input from the measurement unit 3059. The scheduling unit 3013 generates the control information for control of the receiver 305 and the transmitter 307 in accordance with a result of the scheduling, and outputs the generated information to the controller 303. The scheduling unit 3013 generates the information (for example, the DCI (format)) to be used for the scheduling of the physical channels (PDSCH or PUSCH), based on the result of the scheduling.

The CSI report control unit 3015 included in the higher layer processing unit 301 controls a CSI report to be performed by the terminal apparatus 1. The CSI report control unit 3015 transmits information, assumed in order for the terminal apparatus 1 to derive RI/PMI/CQI in the CSI reference resource, for indicating various configurations, to the terminal apparatus 1 through the transmitter 307.

Based on the control information from the higher layer processing unit 301, the controller 303 generates a control signal for controlling the receiver 305 and the transmitter 307. The controller 303 outputs the generated control signal to the receiver 305 and the transmitter 307 to control the receiver 305 and the transmitter 307.

In accordance with the control signal input from the controller 303, the receiver 305 demultiplexes, demodulates, and decodes the reception signal received from the terminal apparatus 1 through the transmit and/or receive antenna 309, and outputs information resulting from the decoding to the higher layer processing unit 301. The radio receiving unit 3057 converts (down-converts) an uplink signal received through the transmit and/or receive antenna 309 into a signal of an intermediate frequency, removes unnecessary frequency components, controls the amplification level in such a manner as to suitably maintain a signal level, performs orthogonal demodulation, based on an in-phase component and an orthogonal component of the received signal, and converts the resulting orthogonally-demodulated analog signal into a digital signal.

The radio receiving unit 3057 removes a portion corresponding to the Guard Interval (GI) from the digital signal resulting from the conversion. The radio receiving unit 3057 performs Fast Fourier Transform (FFT) on the signal from which the Guard Interval has been removed, extracts a signal in the frequency domain, and outputs the resulting signal to the demultiplexing unit 3055.

The demultiplexing unit 1055 demultiplexes the signal input from the radio receiving unit 3057 into PUCCH, PUSCH, and the signal such as the uplink reference signal. The demultiplexing is performed based on radio resource allocation information, predetermined by the base station apparatus 3 using the radio resource control unit 3011, that is included in the uplink grant notified to each of the terminal apparatuses 1. The demultiplexing unit 3055 performs channel compensation of the PUCCH and the PUSCH, based on the channel estimate value input from the measurement unit 3059. The demultiplexing unit 3055 outputs an uplink reference signal resulting from the demultiplexing, to the measurement unit 3059.

The demodulation unit 3053 performs Inverse Discrete Fourier Transform (IDFT) on the PUSCH, obtains modulation symbols, and performs reception signal demodulation, that is, demodulates each of the modulation symbols on the PUCCH and the PUSCH, in compliance with the modulation scheme determined in advance, such as Binary Phase Shift Keying (BPSK), QPSK, 16 QAM, 64 QAM, or 256 QAM or in compliance with the modulation scheme that the base station apparatus 3 itself notified in advance with the uplink grant to each of the terminal apparatuses 1. The demodulation unit 3053 demultiplexes the modulation symbols of multiple pieces of uplink data transmitted on the same PUSCH with the MIMO SM, based on the number of spatial-multiplexed sequences notified in advance with the uplink grant to each of the terminal apparatuses 1 and information indicating the precoding to be performed on the sequences.

The decoding unit 3051 decodes the coded bits of the PUCCH and the PUSCH, which have been demodulated, in compliance with a predetermined coding scheme by using the transmission or original coding rate that is predetermined or notified in advance with the uplink grant to the terminal apparatus 1 by the base station apparatus 3, and outputs the decoded uplink data and uplink control information to the higher layer processing unit 101. In a case that the PUSCH is retransmitted, the decoding unit 3051 performs the decoding with the coded bits input from the higher layer processing unit 301 and retained in a HARQ buffer, and the demodulated coded bits. The measurement unit 3059 measures the channel estimate value, the channel quality, and the like, based on the uplink reference signal input from the demultiplexing unit 3055, and outputs a signal resulting from the measurement to the demultiplexing unit 3055 and the higher layer processing unit 301.

The transmitter 307 generates the downlink reference signal in accordance with the control signal input from the controller 303, codes and modulates the downlink control information and the downlink data that are input from the higher layer processing unit 301, multiplexes the PDCCH, the PDSCH, and the downlink reference signal and transmits a signal resulting from the multiplexing to the terminal apparatus 1 through the transmit and/or receive antenna 309 or transmits the PDCCH, the PDSCH, and the downlink reference signal to the terminal apparatus 1 through the transmit and/or receive antenna 309 by using separate radio resources.

The coding unit 3071 codes the downlink control information and the downlink data input from the higher layer processing unit 301. The modulation unit 3073 modulates the coded bits input from the coding unit 3071, in compliance with a modulation scheme such as BPSK, QPSK, 16 QAM, 64 QAM, and 256 QAM.

The downlink reference signal generation unit 3079 generates, as the downlink reference signal, a sequence known to the terminal apparatus 1, the sequence being determined in accordance with a predetermined rule, based on the physical cell identity (PCI) for identifying the base station apparatus 3, or the like.

The multiplexing unit 3075, in accordance with the number of PDSCH layers to be spatially-multiplexed, maps at least one piece of downlink data to be transmitted in one PDSCH to at least one layer, and performs precoding for the at least one layer. The multiplexing unit 3075 multiplexes the downlink physical channel signal and the downlink reference signal for each transmit antenna port. The multiplexing unit 3075 maps the downlink physical channel signal and the downlink reference signal in the resource element for each transmit antenna port.

The radio transmitting unit 3077 performs Inverse Fast Fourier Transform (IFFT) on the modulation symbol resulting from the multiplexing or the like to perform the modulation in compliance with an OFDM scheme, adds the Guard Interval to the OFDM-modulated OFDM symbol to generate a baseband digital signal, converts the baseband digital signal into an analog signal, generates an in-phase component and an orthogonal component of an intermediate frequency from the analog signal, removes frequency components unnecessary for the intermediate frequency band, converts (up-converts) the signal of the intermediate frequency into a signal of a high frequency, removes unnecessary frequency components, performs power amplification, and outputs a final result to the transmit and/or receive antenna 309 for transmission.
(1) More specifically, a terminal apparatus 1 according to a first aspect of the present invention is a terminal apparatus for communicating with a base station apparatus, the terminal apparatus including: a higher layer processing unit configured to receive first information and second information to be used for communication with the base station apparatus; a transmitter configured to transmit a first reference signal, a second reference signal, a third reference signal, and a physical uplink shared channel; and a receiver configured to receive a physical downlink control channel. The first information includes information about an allocation of the second reference signal, the second information includes information about an allocation of the third reference signal, the physical uplink shared channel is transmitted based on downlink control information received on the physical downlink control channel, the first reference signal is always allocated on a part of resource elements in a resource block determined based on the downlink control information, the second reference signal is allocated on resource elements different from the first reference signal in the resource block, based on the first information, the third reference signal is allocated on first resource elements, which are a part of resource elements in the resource block, based on the second information, and in a case that a position of resource elements on which the second reference signal is allocated and a position of the first resource elements are same, the third reference signal is not mapped to the resource elements.
(2) In the above-described first aspect, in a case that the third reference signal is not allocated to second resource elements having a symbol number different from the first resource elements, the third reference signal is mapped to the second resource elements.
(3) A base station apparatus 3 according to a second aspect of the present invention is a base station apparatus for communicating with a terminal apparatus, the base station apparatus including: a higher layer processing unit configured to receive first information and second information to be used for communication with the terminal apparatus; a transmitter configured to transmit a physical downlink control channel; and a receiver configured to receive a first reference signal, a second reference signal, a third reference signal, and a physical uplink shared channel. The first information includes information about an allocation of the second reference signal, the second information includes information about an allocation of the third reference signal, the physical uplink shared channel is transmitted based on downlink control information transmitted on the physical downlink control channel, the first reference signal is always allocated on a part of resource elements in a resource block determined based on the downlink control information, the second reference signal is allocated on resource elements different from the first reference signal in the resource block, based on the first information, the third reference signal is allocated on first resource elements, which are a part of resource elements in the resource block, based on the second information, and in a case that a position of resource elements on which the second reference signal is allocated and a position of the first resource elements are same, the third reference signal is not mapped to the resource elements.
(4) In the above-described second aspect, in a case that the third reference signal is not allocated to second resource elements having a symbol number different from the first resource elements, the third reference signal is mapped to the second resource elements.
(5) A communication method according to a third aspect of the present invention is a communication method for a terminal apparatus for communicating with a base station apparatus, the communication method including the steps of: receiving first information and second information to be used for communication with the base station apparatus; transmitting a first reference signal, a second reference signal, a third reference signal, and a physical uplink shared channel; and receiving a physical downlink control channel. The first information includes information about an allocation of the second reference signal, the second information includes information about an allocation of the third reference signal, the physical uplink shared channel is transmitted based on downlink control information received on the physical downlink control channel, the first reference signal is always allocated on a part of resource elements in a resource block determined based on the downlink control information, the second reference signal is allocated on resource elements different from the first reference signal in the resource block, based on the first information, the third reference signal is allocated on first resource elements, which are a part of resource elements in the resource block, based on the second information, and in a case that a position of resource elements on which the second reference signal is allocated and a position of the first resource elements are same, the third reference signal is not mapped to the resource elements.
(6) A communication method according to a fourth aspect of the present invention is a communication method for a base station apparatus for communicating with a terminal apparatus, the communication method including the steps of: receiving first information and second information to be used for communication with the terminal apparatus; transmitting a physical downlink control channel; and receiving a first reference signal, a second reference signal, a third reference signal, and a physical uplink shared channel. The first information includes information about an allocation of the second reference signal, the second information includes information about an allocation of the third reference signal, the physical uplink shared channel is transmitted based on downlink control information transmitted on the physical downlink control channel, the first reference signal is always allocated on a part of resource elements in a resource block determined based on the downlink control information, the second reference signal is allocated on resource elements different from the first reference signal in the resource block, based on the first information, the third reference signal is allocated on first resource elements, which are a part of resource elements in the resource block, based on the second information, and in a case that a position of resource elements on which the second reference signal is allocated and a position of the first resource elements are same, the third reference signal is not mapped to the resource elements.
(7) An integrated circuit according to a fifth aspect of the present invention is an integrated circuit mounted on a terminal apparatus for communicating with a base station apparatus, the integrated circuit including: a reception unit configured to receive first information and second information to be used for communication with the base station apparatus; a transmission unit configured to transmit a first reference signal, a second reference signal, a third reference signal, and a physical uplink shared channel; and a reception unit configured to receive a physical downlink control channel. The first information includes information about an allocation of the second reference signal, the second information includes information about an allocation of the third reference signal, the physical uplink shared channel is transmitted based on downlink control information received on the physical downlink control channel, the first reference signal is always allocated on a part of resource elements in a resource block determined based on the downlink control information, the second reference signal is allocated on resource elements different from the first reference signal in the resource block, based on the first information, the third reference signal is allocated on first resource elements, which are a part of resource elements in the resource block, based on the second information, and in a case that a position of resource elements on which the second reference signal is allocated and a position of the first resource elements are same, the third reference signal is not mapped to the resource elements.
(8) An integrated circuit according to a sixth aspect of the present invention is an integrated circuit mounted on a base station apparatus for communicating with a terminal apparatus, the integrated circuit including: a reception unit configured to receive first information and second information to be used for communication with the terminal apparatus; a transmission unit configured to transmit a physical downlink control channel; and a reception unit configured to receive a first reference signal, a second reference signal, a third reference signal, and a physical uplink shared channel. The first information includes information about an allocation of the second reference signal, the second information includes information about an allocation of the third reference signal, the physical uplink shared channel is transmitted based on downlink control information transmitted on the physical downlink control channel, the first reference signal is always allocated on a part of resource elements in a resource block determined based on the downlink control information, the second reference signal is allocated on resource elements different from the first reference signal in the resource block, based on the first information, the third reference signal is allocated on first resource elements, which are a part of resource elements in the resource block, based on the second information, and in a case that a position of resource elements on which the second reference signal is allocated and a position of the first resource elements are same, the third reference signal is not mapped to the resource elements.

A program running on an apparatus according to an aspect of the present invention may serve as a program that controls a Central Processing Unit (CPU) and the like to cause a computer to function in such a manner as to realize the functions of the embodiment according to the aspect of the present invention. Programs or the information handled by the programs are temporarily stored in a volatile memory such as a Random Access Memory (RAM), a non-volatile memory such as a flash memory, a Hard Disk Drive (HDD), or any other storage device system.

Note that a program for realizing the functions of the embodiment according to an aspect of the present invention may be recorded in a computer-readable recording medium. This configuration may be realized by causing a computer system to read the program recorded on the recording medium for execution. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, a medium dynamically retaining the program for a short time, or any other computer readable recording medium.

Furthermore, each functional block or various characteristics of the apparatuses used in the above-described embodiment may be implemented or performed on an electric circuit, for example, an integrated circuit or multiple integrated circuits. An electric circuit designed to perform the functions described in the present specification may include a general-purpose processor, a Digital Signal Processor (DSP), an Application Specific Integrated Circuit (ASIC), a Field Programmable Gate Array (FPGA), or other programmable logic devices, discrete gates or transistor logic, discrete hardware components, or a combination thereof. The general-purpose processor may be a microprocessor or may be a processor of known type, a controller, a micro-controller, or a state machine instead. The above-mentioned electric circuit may include a digital circuit, or may include an analog circuit. Furthermore, in a case that with advances in semiconductor technology, a circuit integration technology appears that replaces the present integrated circuits, it is also possible to use a new integrated circuit based on the technology according to one or more aspects of the present invention.

Note that, in the embodiment according to one aspect of the present invention, an example has been described in which the present invention is applied to a communication system constituted by a base station apparatus and a terminal apparatus, but the present invention can also be applied in a system in which terminals communicate with each other, such as Device to Device (D2D).

Note that the present invention of the present patent application is not limited to the above-described embodiment. According to the embodiment, apparatuses have been described as an example, but the present invention of the present application is not limited to these apparatuses, and is applicable to a terminal apparatus or a communication apparatus of a fixed-type or a stationary-type electronic apparatus installed indoors or outdoors, for example, an AV apparatus, a kitchen apparatus, a cleaning or washing machine, an air-conditioning apparatus, office equipment, a vending machine, and other household apparatuses.

The embodiments of the present invention have been described in detail above referring to the drawings, but the specific configuration is not limited to the embodiments and includes, for example, an amendment to a design that falls within the scope that does not depart from the gist of the present invention. Various modifications are possible within the scope of one aspect of the present invention defined by claims, and embodiments that are made by suitably combining technical means disclosed according to the different embodiments are also included in the technical scope of the present invention. A configuration in which constituent elements, described in the respective embodiments and having mutually the same effects, are substituted for one another is also included in the technical scope of the present invention.

### Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

1 (1A, 1B, 1C) Terminal apparatus
3 Base station apparatus
10 TXRU
11 Phase shifter
12 Antenna unit
101 Higher layer processing unit
103 Controller
105 Receiver
107 Transmitter
109 Antenna unit
301 Higher layer processing unit
303 Controller
305 Receiver
307 Transmitter
1011 Radio resource control unit
1013 Scheduling information interpretation unit
1015 Channel State Information report control unit
1051 Decoding unit
1053 Demodulation unit
1055 Demultiplexing unit
1057 Radio receiving unit
1059 Measurement unit
1071 Coding unit
1073 Modulation unit
1075 Multiplexing unit
1077 Radio transmitting unit
1079 Uplink reference signal generation unit
3011 Radio resource control unit
3013 Scheduling unit
3015 Channel State Information report control unit
3051 Decoding unit
3053 Demodulation unit
3055 Demultiplexing unit
3057 Radio receiving unit
3059 Measurement unit
3071 Coding unit
3073 Modulation unit
3075 Multiplexing unit
3077 Radio transmitting unit
3079 Downlink reference signal generation unit

## Claims

1. A terminal apparatus for communicating with a base station apparatus, the terminal apparatus comprising:
a multiplexing unit configured to map a Phase Tracking Reference Signal (PTRS) to resources for a Physical Uplink Shared Channel (PUSCH) according to a first pattern, and map a Demodulation Reference Signal (DMRS) to the resources for the PUSCH according to a second pattern; and
a transmitter configured to transmit the PUSCH with the PTRS and the DMRS mapped to the resources for the PUSCH, wherein
in a case that a symbol position of the PTRS overlaps with a symbol position of the DMRS, the multiplexing unit maps the PTRS to a resource of the resources at a symbol position different from the symbol position that overlaps.

2. The terminal apparatus according to claim 1, wherein
in the case that the symbol position of the PTRS overlaps with the symbol position of the DMRS, the multiplexing unit maps the PTRS to a resource of the resources at a different symbol position in a same subcarrier.

3. A communication method for a terminal apparatus for communicating with a base station apparatus, the communication method comprising the steps of:
mapping a Phase Tracking Reference Signal (PTRS) to resources for a Physical Uplink Shared Channel (PUSCH) according to a first pattern, and mapping a Demodulation Reference Signal (DMRS) to the resources for the PUSCH according to a second pattern; and
transmitting the PUSCH with the PTRS and the DMRS mapped to the resources for the PUSCH, wherein
in a case that a symbol position of the PTRS overlaps with a symbol position of the DMRS, the PTRS is mapped to a resource of the resources at a symbol position different from the symbol position that overlaps.

4. The communication method according to claim 3, wherein
in the case that the symbol position of the PTRS overlaps with the symbol position of the DMRS, the multiplexing unit maps the PTRS to a resource of the resources at a different symbol position in a same subcarrier.
